(19) Europäisches Patentamt / European Patent Office / Office européen des brevets

(11) **EP 3 107 296 B1**

## (12) EUROPEAN PATENT SPECIFICATION

(45) Date of publication and mention of the grant of the patent:
**18.08.2021 Bulletin 2021/33**

(51) Int Cl.:
*H04N 19/176* (2014.01)　　*H04N 19/70* (2014.01)
*H04N 19/194* (2014.01)　　*H04N 19/42* (2014.01)
*H04N 19/157* (2014.01)　　*H04N 19/103* (2014.01)
*H04N 19/40* (2014.01)　　*H04N 19/436* (2014.01)

(21) Application number: **15746309.2**

(22) Date of filing: **27.01.2015**

(86) International application number:
**PCT/JP2015/000351**

(87) International publication number:
**WO 2015/118835 (13.08.2015 Gazette 2015/32)**

(54) **VIDEO ENCODING APPARATUS, VIDEO ENCODING METHOD, AND VIDEO ENCODING PROGRAM**

VIDEOKODIERUNGSVORRICHTUNG, VIDEOKODIERUNGSVERFAHREN UND VIDEOKODIERUNGSPROGRAMM

APPAREIL, PROCÉDÉ ET PROGRAMME DE CODAGE VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2014 JP 2014023088**

(43) Date of publication of application:
**21.12.2016 Bulletin 2016/51**

(73) Proprietor: **NEC Corporation**
**Tokyo 108-8001 (JP)**

(72) Inventors:
- **SHIMOFURE, Kensuke**
  **Tokyo 108-8001 (JP)**
- **TSUJI, Naoya**
  **Tokyo 108-8001 (JP)**
- **ISHIDA, Takayuki**
  **Tokyo 108-8001 (JP)**
- **NAGAYAMA, Suguru**
  **Tokyo 108-8001 (JP)**
- **CHONO, Keiichi**
  **Tokyo 108-8001 (JP)**

(74) Representative: **Vossius & Partner**
**Patentanwälte Rechtsanwälte mbB**
**Siebertstrasse 3**
**81675 München (DE)**

(56) References cited:

EP-A1- 2 343 899　　WO-A1-2011/049119
JP-A- H0 377 477　　JP-A- 2014 017 621
JP-A- 2014 131 141　　US-A1- 2011 170 608

- **DONG ZHANG ET AL: "Fast Transcoding from H.264 AVC to High Efficiency Video Coding", MULTIMEDIA AND EXPO (ICME), 2012 IEEE INTERNATIONAL CONFERENCE ON, IEEE, 9 July 2012 (2012-07-09), pages 651-656, XP032235754, DOI: 10.1109/ICME.2012.112 ISBN: 978-1-4673-1659-0**
- **ZHUO-YI LU ET AL: "Fast block size selection for H.264 video-downsizing transcoding", INFORMATION SCIENCES SIGNAL PROCESSING AND THEIR APPLICATIONS (ISSPA), 2010 10TH INTERNATIONAL CONFERENCE ON, IEEE, PISCATAWAY, NJ, USA, 10 May 2010 (2010-05-10), pages 101-104, XP031777865, ISBN: 978-1-4244-7165-2**
- **PHILIPP HELLE ET AL: "Block Merging for Quadtree-Based Partitioning in HEVC", IEEE TRANSACTIONS ON CIRCUITS AND SYSTEMS FOR VIDEO TECHNOLOGY, INSTITUTE OF ELECTRICAL AND ELECTRONICS ENGINEERS, vol. 22, no. 12, 1 December 2012 (2012-12-01), pages 1720-1731, XP011487155, ISSN: 1051-8215, DOI: 10.1109/TCSVT.2012.2223051**

- TONG SHEN ET AL: "Ultra Fast H.264/AVC to HEVC Transcoder", DATA COMPRESSION CONFERENCE (DCC), 2013, IEEE, 20 March 2013 (2013-03-20), pages 241-250, XP032429416, DOI: 10.1109/DCC.2013.32 ISBN: 978-1-4673-6037-1

**Description**

FIELD OF THE INVENTION

The present invention relates to a video encoding device to which a technique of distributing the computational load of a video encoding process is applied.

BACKGROUND OF THE INVENTION

In the video coding scheme based on Non Patent Literature (NPL) 1, each frame of digitized video is split into coding tree units (CTUs), and each CTU is encoded in raster scan order. Each CTU is split into coding units (CUs) and encoded, in a quadtree structure. Each CU is split into prediction units (PUs) and predicted. The prediction error of each CU is split into transform units (TUs) and frequency-transformed, in a quadtree structure. Hereafter, a CU of the largest size is referred to as "largest CU" (largest coding unit: LCU), and a CU of the smallest size is referred to as "smallest CU" (smallest coding unit: SCU). The LCU size and the CTU size are the same.

Each CU is prediction-encoded by intra prediction or inter-frame prediction. The following describes intra prediction and inter-frame prediction.

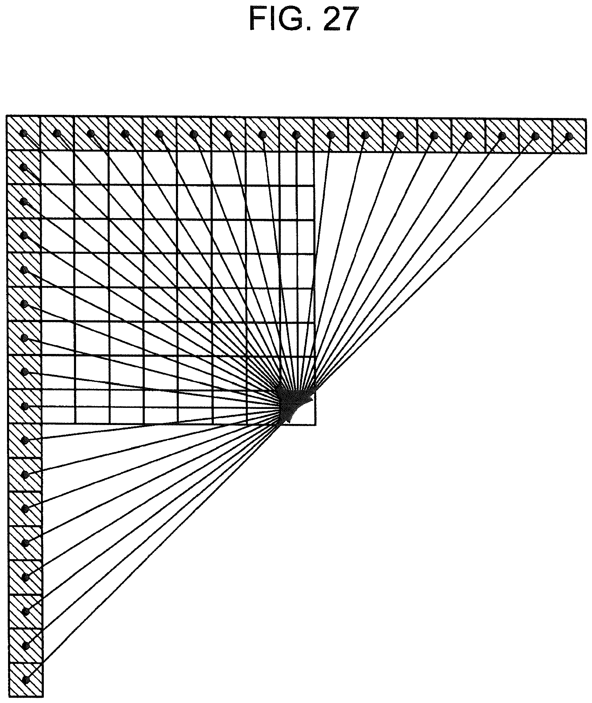

Intra prediction is prediction for generating a prediction image from a reconstructed image of a frame to be encoded. NPL 1 defines 33 types of angular intra prediction depicted in Fig. 27. In angular intra prediction, a reconstructed pixel near a block to be encoded is used for extrapolation in any of 33 directions depicted in Fig. 27, to generate an intra prediction signal. In addition to 33 types of angular intra prediction, NPL 1 defines DC intra prediction for averaging reconstructed pixels near the block to be encoded, and planar intra prediction for linear interpolating reconstructed pixels near the block to be encoded. A CU encoded based on intra prediction is hereafter referred to as "intra CU".

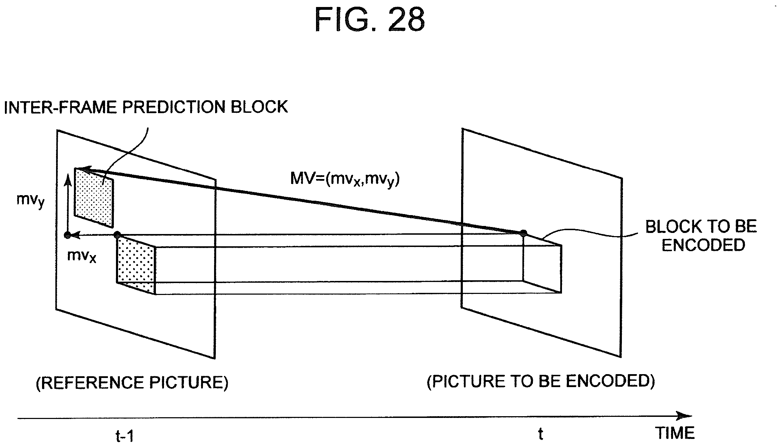

Inter-frame prediction is prediction based on an image of a reconstructed frame (reference picture) different in display time from a frame to be encoded. Inter-frame prediction is hereafter also referred to as "inter prediction". Fig. 28 is an explanatory diagram depicting an example of inter-frame prediction. A motion vector MV = ($mv_x$, $mv_y$) indicates the amount of translation of a reconstructed image block of a reference picture relative to a block to be encoded. In inter prediction, an inter prediction signal is generated based on a reconstructed image block of a reference picture (using pixel interpolation if necessary). A CU encoded based on inter-frame prediction is hereafter referred to as "inter CU".

Whether a CU is an intra CU or an inter CU is signaled by pred_mode_flag syntax described in NPL 1.

A frame encoded including only intra CUs is called "I frame" (or "I picture"). A frame encoded including not only intra CUs but also inter CUs is called "P frame" (or "P picture"). A frame encoded including inter CUs that each use not only one reference picture but two reference pictures simultaneously for the inter prediction of the block is called "B frame" (or "B picture").

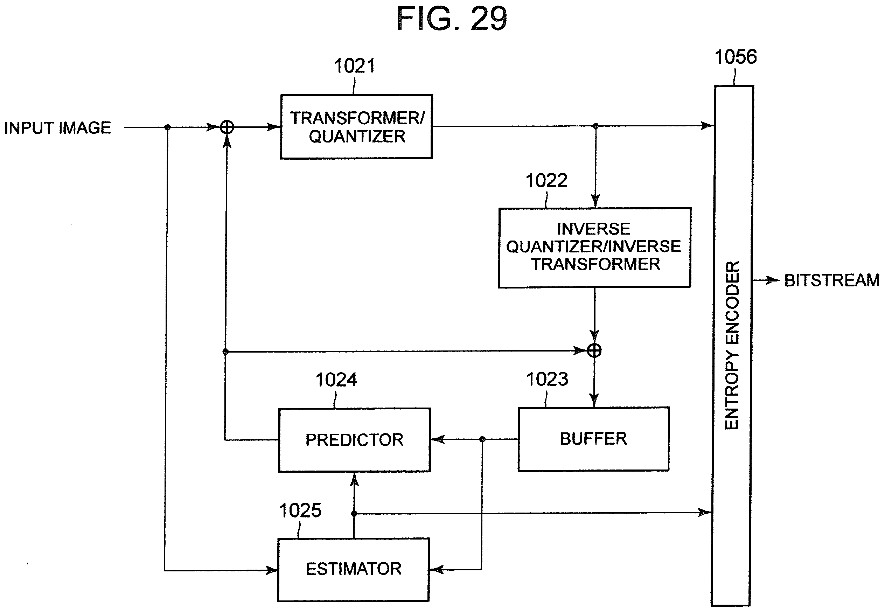

The following describes the structure and operation of a typical video encoding device that receives each CU of each frame of digitized video as an input image and outputs a bitstream, with reference to Fig. 29.

A video encoding device depicted in Fig. 29 includes a transformer/quantizer 1021, an inverse quantizer/inverse transformer 1022, a buffer 1023, a predictor 1024, an estimator 1025, and an entropy encoder 1056.

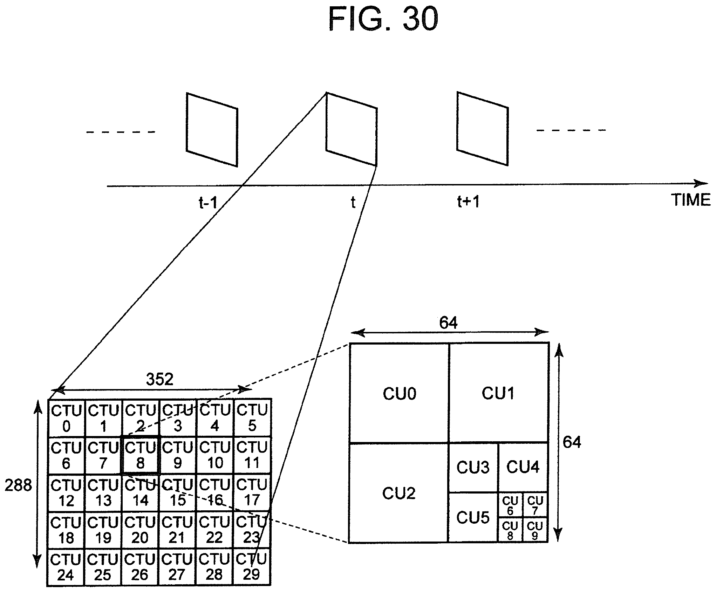

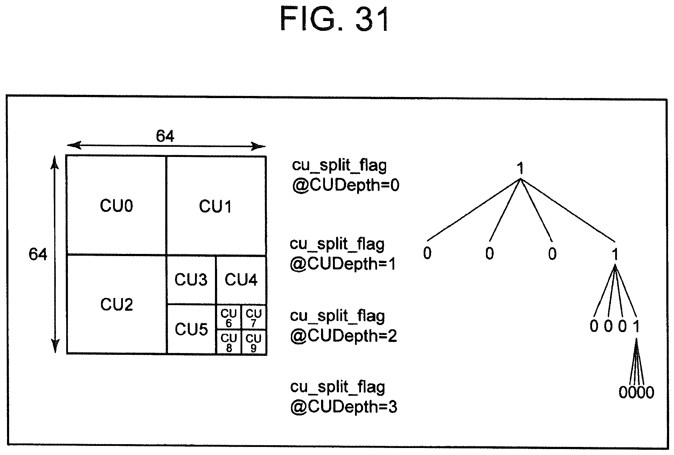

Fig. 30 is an explanatory diagram depicting an example of CTU partitioning of a frame t and an example of CU partitioning of the eighth CTU (CTU8) included in the frame t, in the case where the spatial resolution of the frame is the common intermediate format (CIF) and the CTU size is 64. Fig. 31 is an explanatory diagram depicting a quadtree structure corresponding to the example of CU partitioning of CTU8. The quadtree structure, i.e. the CU partitioning shape, of each CTU is signaled by split_cu_flag syntax described in NPL 1.

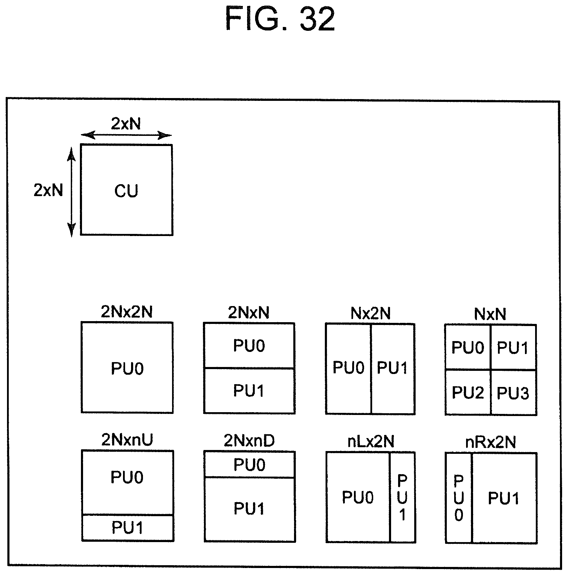

Fig. 32 is an explanatory diagram depicting PU partitioning shapes of a CU. In the case where the CU is an intra CU, square PU partitioning is selectable. In the case where the CU is an inter CU, not only square but also rectangular PU partitioning is selectable. The PU partitioning shape of each CU is signaled by part_mode syntax described in NPL 1.

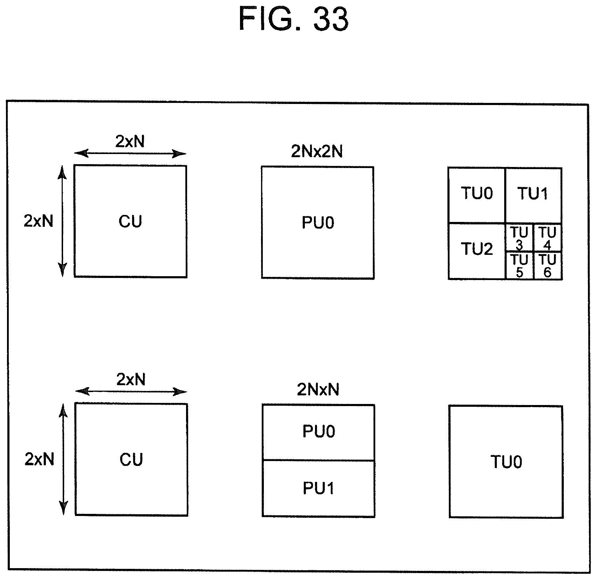

Fig. 33 is an explanatory diagram depicting examples of TU partitioning of a CU. An example of TU partitioning of an intra CU having a 2N×2N PU partitioning shape is depicted in the upper part of the drawing. In the case where the CU is an intra CU, the root of the quadtree is located in the PU, and the prediction error of each PU is expressed by the quadtree structure. An example of TU partitioning of an inter CU having a 2N×N PU partitioning shape is depicted in the lower part of the drawing. In the case where the CU is an inter CU, the root of the quadtree is located in the CU, and the prediction error of the CU is expressed by the quadtree structure. The quadtree structure of the prediction error, i.e. the TU partitioning shape of each CU, is signaled by split_tu_flag syntax described in NPL 1.

The estimator 1025 determines, for each CTU, a split_cu_flag syntax value for determining a CU partitioning shape that minimizes the coding cost. The estimator 1025 determines, for each CU, a pred_mode_flag syntax value for determining intra prediction/inter prediction, a part_mode syntax value for determining a PU partitioning shape, and a split_tu_flag syntax value for determining a TU partitioning shape that minimize the coding cost. The estimator 1025 determines, for each PU, an intra prediction direction, a motion vector, etc. that minimize the coding cost.

NPL 2 discloses a method of determining the split_cu_flag syntax value, the pred_mode_flag syntax value, the part_mode syntax value, the split_tu_flag syntax value, the intra prediction direction, the motion vector, etc. that minimize coding cost J based on a Lagrange multiplier λ.

The following briefly describes a decision process for the split_cu_flag syntax value, the pred_mode_flag syntax value, and the part_mode syntax value, with reference to the section 4.8.3 Intra/Inter/PCM mode decision in NPL 2.

The section discloses a CU mode decision process of determining the pred_mode_flag syntax value and the part_mode syntax value of a CU. The section also discloses a CU partitioning shape decision process of determining the split_cu_flag syntax value by recursively executing the CU mode decision process.

The CU mode decision process is described first. InterCandidate which is a set of PU partitioning shape candidates of inter prediction, IntraCandidate which is a set of PU partitioning shape candidates of intra prediction, and $J_{SSE}$(mode) which is a sum of square error (SSE) coding cost for a coding mode (mode) are defined as follows.

$$\text{InterCandidate} = \{\text{INTER\_2N}\times\text{2N}, \text{INTER\_2N}\times\text{N}, \text{INTER\_N}\times\text{2N}, \text{INTER\_2N}\times\text{N},$$
$$\text{INTER\_N}\times\text{2N}, \text{INTER\_2N}\times\text{nU}, \text{INTER\_2N}\times\text{nD}, \text{INTER\_nL}\times\text{2N}, \text{INTER\_nR}\times\text{2N},$$
$$\text{INTER\_N}\times\text{N}\}$$

$$\text{IntraCandidate} = \{\text{INTRA\_2N}\times\text{2N}, \text{INTRA\_N}\times\text{N}\}$$

$$J_{SSE}(\text{mode}) = D_{SSE}(\text{mode}) + \lambda_{\text{mode}} \cdot R_{\text{mode}}(\text{mode})$$

[Math. 1]

$$\lambda_{\text{mode}} = 2^{\frac{QP-12}{3}}$$

Here, $D_{SSE}$(mode) denotes the SSE of the input image signal of the CU and the reconstructed image signal obtained in the encoding using mode, $R_{mode}$(mode) denotes the number of bits of the CU generated in the encoding using mode (including the number of bits of the below-mentioned transform quantization value), and QP denotes a quantization parameter.

In the CU mode decision process, bestPUmode which is the combination of pred_mode_flag syntax and part_mode syntax that minimize the SSE coding cost $J_{SSE}$(mode) is selected from InterCandidate and IntraCandidate. The CU mode decision process can be formulated as follows.

[Math. 2]

$$bestPUmode = \arg\min_{PUmode \in PUCandidate} \{J_{SSE}(PUmode)\}$$

$$\text{PUCandidate} = \{\text{InterCandidate}, \text{IntraCandidate}\}$$

The CU partitioning shape decision process is described next.

The SSE coding cost of a CU (hereafter referred to as "node") at CUDepth is the SSE coding cost of bestPUmode of the node, as depicted in Fig. 31. The SSE coding cost $J_{SSE}$(node, CUDepth) of the node can thus be defined as follows.

[Math. 3]

$$J_{SSE}(node, CUDepth) = \min_{PUmode \in PUCandidate} \{J_{SSE}(PUmode)\}$$

The SSE coding cost of the i-th ($1 \leq i \leq 4$) child CU (hereafter referred to as "child node", "leaf", or the like) of the CU at CUDepth is the SSE coding cost of the i-th CU at CUDepth+1. The SSE coding cost $J_{SSE}$(leaf(i), CUDepth) of the i-th leaf can thus be defined as follows.

$$J_{SSE}(leaf(i), CUDepth) = J_{SSE}(node, CUDepth+1)$$

Whether or not to split the CU into four child CUs can be determined by comparing whether or not the SSE coding cost of the node is greater than the sum of the SSE coding costs of its leaves. In the case where $J_{SSE}$(node, CUDepth) is greater than the value of Expression (1) given below, the CU is split into four child CUs (split_cu_flag = 1). In the case where $J_{SSE}$(node, CUDepth) is not greater than the value of Expression (1), the CU is not split into four child CUs (split_cu_flag = 0).
[Math. 4]

$$\sum_{i=1}^{4} J_{SSE}(leaf(i), CUDepth)$$

$$(1)$$

In the CU quadtree structure decision process, the above-mentioned comparison is recursively executed for each CUDepth, to determine the quadtree structure of the CTU. In other words, split_cu_flag of each leaf is determined for each CUDepth.

The estimator 1025 equally determines split_tu_flag, the intra prediction direction, the motion vector, etc., by minimizing the coding cost J based on the Lagrange multiplier $\lambda$.

The predictor 1024 generates a prediction signal corresponding to the input image signal of each CU, based on the split_cu_flag syntax value, the pred_mode_flag syntax value, the part_mode syntax value, the split_tu_flag syntax value, the intra prediction direction, the motion vector, etc. determined by the estimator 1025. The prediction signal is generated based on the above-mentioned intra prediction or inter-frame prediction.

The transformer/quantizer 1021 frequency-transforms a prediction error image obtained by subtracting the prediction signal from the input image signal, based on the TU partitioning shape determined by the estimator 1025.

The transformer/quantizer 1021 further quantizes the frequency-transformed prediction error image (frequency transform coefficient). The quantized frequency transform coefficient is hereafter referred to as "transform quantization value".

The entropy encoder 1056 entropy-encodes the split_cu_flag syntax value, the pred_mode_flag syntax value, the part_mode syntax value, the split_tu_flag syntax value, the difference information of the intra prediction direction, and the difference information of the motion vector determined by the estimator 1025, and the transform quantization value.

The inverse quantizer/inverse transformer 1022 inverse-quantizes the transform quantization value. The inverse quantizer/inverse transformer 1022 further inverse-frequency-transforms the frequency transform coefficient obtained by the inverse quantization. The prediction signal is added to the reconstructed prediction error image obtained by the inverse frequency transform, and the result is supplied to the buffer 1023. The buffer 1023 stores the reconstructed image.

The typical video encoding device generates a bitstream based on the operation described above.

Citation List

Patent Literatures

PTL 1: Japanese Patent Application Publication No. 2012-104940
PTL 2: Japanese Patent Application Publication No. 2001-359104

Non Patent Literatures

NPL 1: High Efficiency Video Coding (HEVC) text specification draft 10 (for FDIS & Last Call) of ITU-T SG16 WP3 and ISO/IEC JTC1/SC29/WG11 12th Meeting: Geneva, CH, 14-23 January 2013
NPL 2: High efficiency video coding (HEVC) text specification draft 7 of ITU-T SG16 WP3 and ISO/IEC JTC1/SC29/WG11 12th Meeting: Geneva, CH, 27 April - 7 May 2012
NPL 3: ITU-T H.264 2011/06 Related art comprises:

DONG ZHANG ET AL: "Fast Transcoding from H.264 AVC to High Efficiency Video Coding",MULTIMEDIA AND EXPO (ICME), 2012 IEEE INTERNATIONAL CONFERENCE ON, IEEE, 9 July 2012 (2012-07-09), pages 651-656, ISBN: 978-1-4673-1659-0
TONG SHEN ET AL: "Ultra Fast H.264/AVC to HEVC Transcoder",DATA COMPRESSION CONFERENCE (DCC), 2013, IEEE, 20 March 2013 (2013-03-20), pages 241-250, ISBN: 978-1-4673-6037-1

SUMMARY OF THE INVENTION

The load of all of the video encoding process for determining the split_cu flag syntax value, the pred_mode_flag syntax value, the part_mode syntax value, the split tu_flag syntax value, the intra prediction direction, the motion vector, etc. is concentrated at the specific estimator.

The present invention has an object of distributing the processing load in the video encoding device.

Patent Literature (PTL) 1 describes a video encoding device including a first encoding part and a second encoding part. PTL 2 describes a transcoding device including a decoder and an encoder. Neither PTL 1 nor PTL 2, however, discloses a technique for distributing the load in the video encoding device.

A video encoding device according to the present invention is defined by independent claim 1 and includes: first video encoding means (11) for encoding an input image based on a first encoding standard to generate a first parameter that includes at least block size information;a buffer (12) for storing the input image;a merging means (13) for changing the first parameter generated by the first video encoding means (11), to generate second parameter that includes at least block size information based on a second encoding standard that is different from the first encoding standard; and second video encoding means (14) for encoding the input image stored in the buffer (12) using the second parameter supplied from the merging means (13), to encode the input image for generating a bitstream,wherein the first video encoding means (11) has a function of handling a first encoding process included in a second encoding process handled by the second video encoding means (14), and wherein the merging means (13) changes the first parameter by the first encoding process to the second parameter corresponding to the second encoding process and, in the case where all frequency transform coefficients in the first encoding process are 0, merges blocks in the second encoding process by changing the first parameter to the second parameter.

A video encoding method according to the present invention is defined by independent claim 4.

A video encoding program according to the present invention is defined by independent claim 7.

According to the present invention, the computational load of the video encoding process is distributed between the first video encoding means and the second video encoding means, so that the concentration of the load can be avoided. Moreover, the encoding efficiency in the second video encoding means can be more improved.

BRIEF DESCRIPTION OF THE DRAWINGS

[Fig. 1] It is a block diagram depicting Exemplary Embodiment 1 of a video encoding device.
[Fig. 2] It is an explanatory diagram depicting AVC coded data.
[Fig. 3] It is an explanatory diagram for describing block addresses in a macroblock.
[Fig. 4] It is an explanatory diagram for describing prediction types.
[Fig. 5] It is an explanatory diagram for describing prediction types.
[Fig. 6] It is an explanatory diagram depicting prediction shapes of Tree in AVC.
[Fig. 7] It is an explanatory diagram depicting an HEVCCB which is HEVC coded data.
[Fig. 8] It is an explanatory diagram depicting rules for transcoding from AVC coded data of macroblocks of I SLICE to HEVCCBs.
[Fig. 9] It is an explanatory diagram depicting rules for transcoding from AVC coded data of macroblocks of P_SLICE to HEVCCBs.

[Fig. 10] It is an explanatory diagram depicting rules for transcoding from AVC coded data of macroblocks of B_SLICE to HEVCCBs.

[Fig. 11] It is an explanatory diagram depicting an example of HEVCCBs.

[Fig. 12] It is an explanatory diagram depicting an example of HEVCCBs.

[Fig. 13] It is an explanatory diagram depicting an example of TU extension.

[Fig. 14] It is a flowchart depicting the operation of the video encoding device in Exemplary Embodiment 1.

[Fig. 15] It is a block diagram depicting Exemplary Embodiment 2 of a video encoding device.

[Fig. 16] It is a flowchart depicting the operation of the video encoding device in Exemplary Embodiment 2.

[Fig. 17] It is a block diagram depicting Exemplary Embodiment 3 of a video encoding device.

[Fig. 18] It is a flowchart depicting the operation of the video encoding device in Exemplary Embodiment 3.

[Fig. 19] It is an explanatory diagram depicting an example of screen division.

[Fig. 20] It is a block diagram depicting a video encoding device for processing divided screens in parallel.

[Fig. 21] It is a block diagram depicting a video encoding device for transcoding an input bitstream.

[Fig. 22] It is a block diagram depicting a structural example of an information processing system capable of realizing the functions of a video encoding device according to the present invention.

[Fig. 23] It is a block diagram depicting main parts of a video encoding device according to the present invention.

[Fig. 24] It is a block diagram depicting main parts of another video encoding device according to the present invention.

[Fig. 25] It is a block diagram depicting main parts of another video encoding device according to the present invention.

[Fig. 26] It is a block diagram depicting main parts of another video encoding device according to the present invention.

[Fig. 27] It is an explanatory diagram depicting an example of 33 types of angular intra prediction.

[Fig. 28] It is an explanatory diagram depicting an example of inter-frame prediction.

[Fig. 29] It is an explanatory diagram depicting the structure of a typical video encoding device.

[Fig. 30] It is an explanatory diagram depicting an example of CTU partitioning of a frame t and an example of CU partitioning of CTU8 of the frame t.

[Fig. 31] It is an explanatory diagram depicting a quadtree structure corresponding to the example of CU partitioning of CTU8.

[Fig. 32] It is an explanatory diagram depicting examples of PU partitioning of a CU.

[Fig. 33] It is an explanatory diagram depicting examples of TU partitioning of a CU.

## DESCRIPTION OF THE PREFERRED EMBODIMENTS

The invention is defined by the appended claims. Any references to embodiments that do not fall under the scope of the claims are to be understood as examples useful for understanding the invention.

Exemplary Embodiment 1

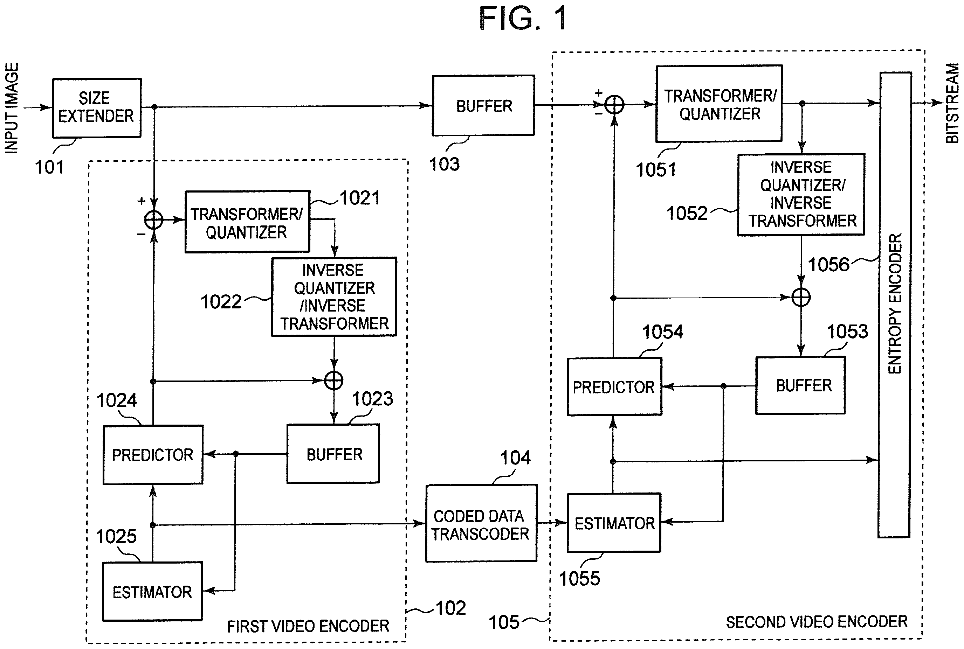

Fig. 1 is a block diagram depicting the structure of a video encoding device in this exemplary embodiment. In the video encoding device depicted in Fig. 1, a first video encoder 102 is an Advanced Video Coding (AVC) video encoder that supports macroblocks equivalent to CTUs of 16×16 pixel LCU size, and a second video encoder 105 is an HEVC video encoder as a background art technique that supports not only 16×16 pixel CTUs but also 32×32 pixel CTUs and 64×64 pixel CTUs. In other words, the largest LCU size that can be supported by the first video encoder 102 is less than or equal to the largest LCU size that can be supported by the second video encoder 105.

The video encoding device in this exemplary embodiment includes a size extender 101, the first video encoder 102, a buffer 103, a coded data transcoder 104, and the second video encoder 105.

The size extender 101 size-extends the width src_pic_width and height src_pic_height of an input image src to a multiple of 16. For example, in the case where (src_pic_width, src_pic_height) = (1920, 1080), the extended width e_src_pic_width and height e_src_pic_height of the input image are (e_src_pic_width, e_src_pic_height) = (1920, 1088). A pixel value in a size-extended area may be a copy of a pixel value of a boundary of the input image or a predetermined pixel value (e.g. 128 representing gray).

The size extender 101 supplies the size-extended input image to the first video encoder 102 and the buffer 103. The first video encoder 102 encodes the size-extended input image according to AVC.

The following describes the structure and operation of the first video encoder 102.

The first video encoder 102 includes a transformer/quantizer 1021, an inverse quantizer/inverse transformer 1022, a buffer 1023, a predictor 1024, and an estimator (first estimator) 1025.

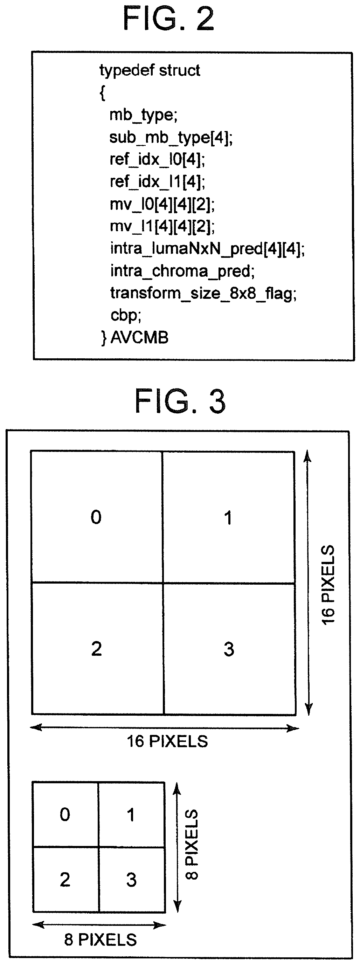

The estimator 1025 determines AVC coded data of each macroblock constituting the size-extended input image, using the size-extended input image and a reconstructed image stored in the buffer 1023. In this specification, AVC coded data (AVCMB) includes coded data (mb_type, sub_mb_type, ref_idx_10, ref_idx_l1, mv_10, mv_l1, intra_lumaN×N_pred, transform_size_8×8_flag, cbp) other than a DCT coefficient of a 16×16 pixel area corresponding to a macroblock, as depicted in Fig. 2. Here, mb_type and sub_mb_type respectively indicate a coding mode of a macroblock defined in Table 7-11, Table 7-13, and Table 7-14 in NPL 3 and a coding mode of a sub-macroblock defined in Table 7-17 and Table 7-18 in NPL 3. Moreover, ref_idx_lx (x = 0/1), mv_lx, intra_lumaN×N_pred, and transform_size_8×8_flag respectively indicate a reference picture index of a reference picture list x, a motion vector of the reference picture list x, a luminance intra prediction direction, and a flag of whether or not the macroblock is encoded using 8×8 DCT. Further, cbp (coded block pattern) indicates a flag of whether or not a frequency transform coefficient of a prediction error is present in the macroblock, that is, whether or not all frequency transform coefficients are 0.

Given that the macroblock is 16×16 pixels as mentioned above and the smallest processing unit in AVC is 4×4 pixels, the position of each piece of AVC coded data in each macroblock is defined by a combination of a 16×16 block address b8 ($0 \leq b8 \leq 3$) in the macroblock (the upper part in Fig. 3) and a block address b4 ($0 \leq b4 \leq 3$) in the 8×8 block (the lower part in Fig. 3). For example, intra_lumaN×N_pred at the position (x, y) = (4, 4) in the macroblock corresponds to (b8, b4) = (0, 3), and can be stored in intra_lumaN×N_pred[0][3].

The estimator 1025 outputs the determined AVC coded data of each macroblock to the predictor 1024 and the coded data transcoder 104.

The predictor 1024 generates a prediction signal corresponding to the size-extended input image signal of each macroblock, based on the mb_type syntax value, the sub_mb_type syntax value, the ref_idx_l0 syntax value, the ref_idx_l1 syntax value, the mv_l0 syntax value, the mv_l1 syntax value, and the intra_lumaN×N_pred syntax value determined by the estimator 1025. The prediction signal is generated based on the above-mentioned intra prediction or inter-frame prediction.

Regarding intra prediction in AVC, intra prediction modes of three block sizes, i.e. Intra_4×4, Intra_8×8, and Intra_16×16, defined by mb_type are available, as described in NPL 3.

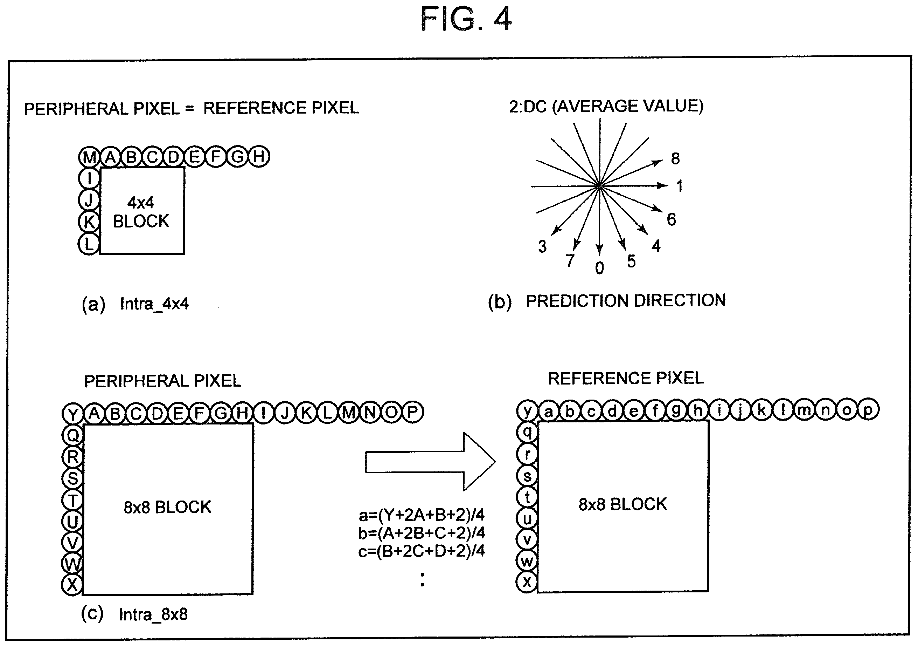

Intra_4×4 and Intra_8×8 are respectively intra prediction of 4×4 block size and 8×8 block size, as can be understood from (a) and (c) in Fig. 4. Each circle (o) in the drawing represents a reference pixel for intra prediction, i.e. the reconstructed image stored in the buffer 1023.

In intra prediction of Intra_4×4, peripheral pixels of the reconstructed image are directly set as reference pixels, and used for padding (extrapolation) in nine directions depicted in (b) in Fig. 4 to form the prediction signal. In intra prediction of Intra_8×8, pixels obtained by smoothing peripheral pixels of the reconstructed image by low-pass filters (1/2, 1/4, 1/2) depicted directly below the right arrow in (c) in Fig. 4 are set as reference signals, and used for extrapolation in the nine directions depicted in (b) in Fig. 4 to form the prediction signal.

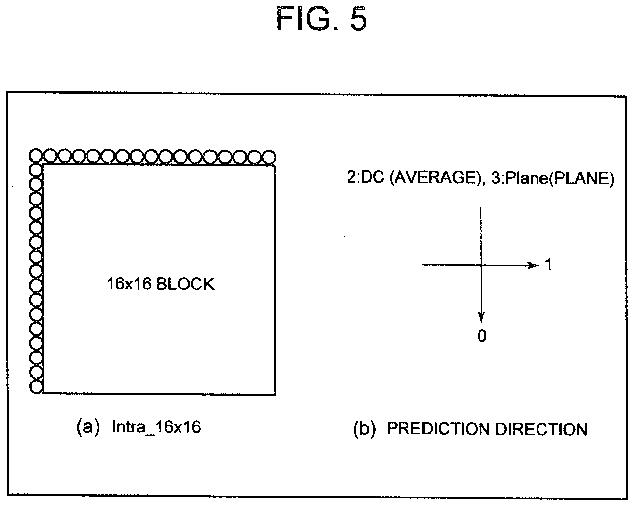

Intra_16×16 is intra prediction of 16×16 block size, as can be understood from (a) in Fig. 5. Each circle (o) in Fig. 5 represents a reference pixel for intra prediction, i.e. the reconstructed image stored in the buffer 1023, as in the example depicted in Fig. 4. In intra prediction of Intra_16×16, peripheral pixels of the reconstructed image are directly set as reference pixels, and used for extrapolation in four directions depicted in (b) in Fig. 5 to form the prediction signal.

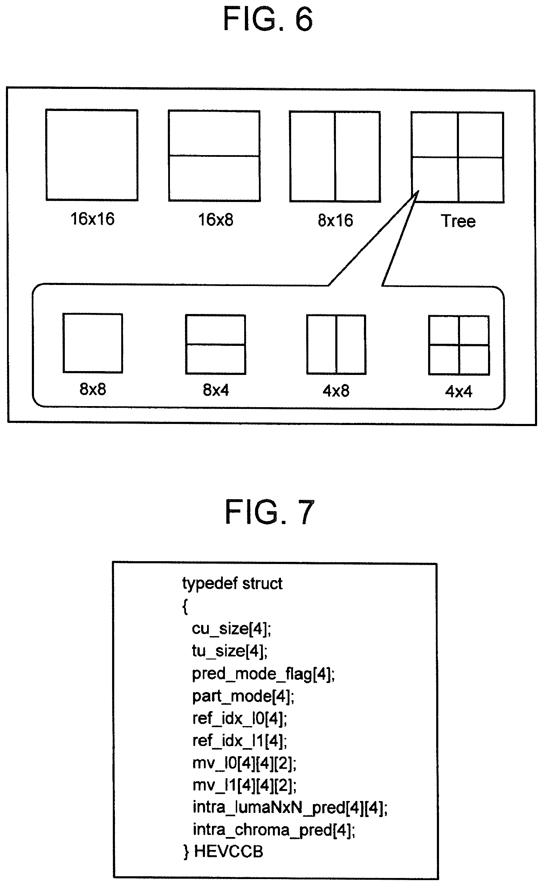

Regarding inter-frame prediction in AVC, 16×16, 16×8, 8×16, and Tree prediction shapes defined by mb_type are available, as depicted in Fig. 6. In the case where the macroblock is Tree, each 8×8 sub-macroblock has a prediction shape of any of 8×8, 8×4, 4×8, and 4×4 defined by sub_mb_type . It is assumed in this specification that, in the case where mb_type is Tree (P_8×8 or B_8×8), each 8×8 sub-macroblock is limited only to 8×8, for simplicity's sake.

The transformer/quantizer 1021 frequency-transforms a prediction error image obtained by subtracting the prediction signal from the size-extended input image signal, based on the mb_type syntax value and the transform_size_8×8_flag syntax value determined by the estimator 1025.

The transformer/quantizer 1021 further quantizes the frequency-transformed prediction error image (frequency transform coefficient). The quantized frequency transform coefficient is hereafter referred to as "transform quantization value".

The inverse quantizer/inverse transformer 1022 inverse-quantizes the transform quantization value. The inverse quantizer/inverse transformer 1022 further inverse-frequency-transforms the frequency transform coefficient obtained by the inverse quantization. The prediction signal is added to the reconstructed prediction error image obtained by the inverse frequency transform, and the result is supplied to the buffer 1023. The buffer 1023 stores the reconstructed image.

Based on the operation described above, the first video encoder 102 encodes the size-extended input image signal.

The coded data transcoder 104 transcodes the AVCMB of each macroblock to an HEVCCB which is HEVC coded data (cu_size, tu_size, pred_mode_flag, part_mode, ref_idx_l0, ref_idx_l1, mv_l0, mv_l1, intra_lumaN×N_pred, intra_chroma_pred) of a 16×16 pixel area corresponding to the macroblock, as depicted in Fig. 7. Here, cu_size and tu_size respectively indicate CU size and TU size.

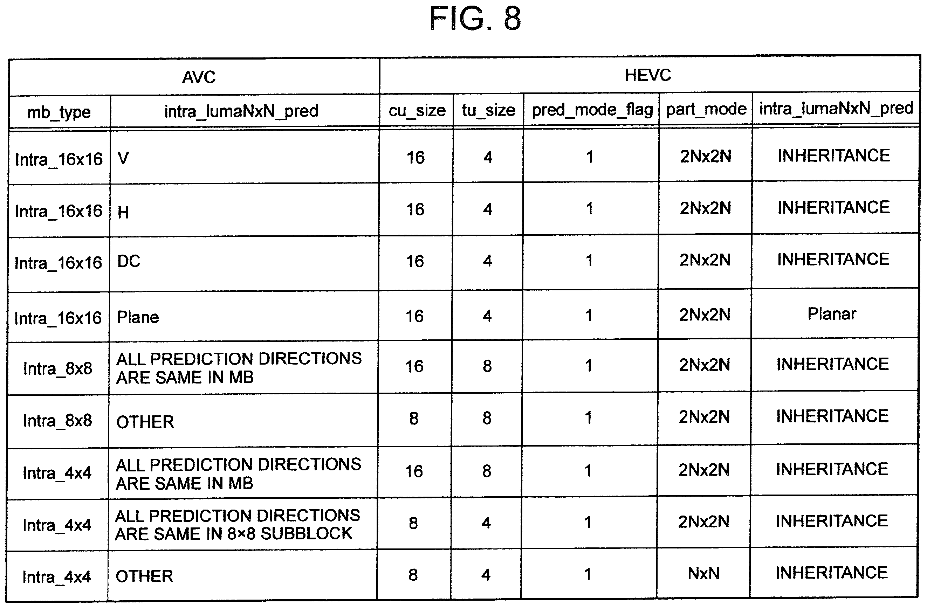

In Figs. 8 to 10, V demotes the vertical direction, and H denotes the horizontal direction. Each row indicates a transcoding rule for the corresponding mb_type and intra_lumaN×N_pred.

Given that the smallest LCU size is 16×16 pixels, the smallest SCU size is 8×8 pixels, and the smallest processing unit is 4×4 pixels in HEVC, HEVC coded data can be managed in units of 16×16 pixels. The position of HEVC coded data in 16×16 pixels can be defined by a combination of a 8×8 block address b8 ($0 \leq b8 \leq 3$) in the

macroblock and a block address b4 ($0 \leq b4 \leq 3$) in the $8 \times 8$ block, as with AVC coded data.

For example, in the case where the CU size is 16, cu_size[b8] ($0 \leq b8 \leq 3$) of HEVC coded data in $16 \times 16$ pixels are all 16.

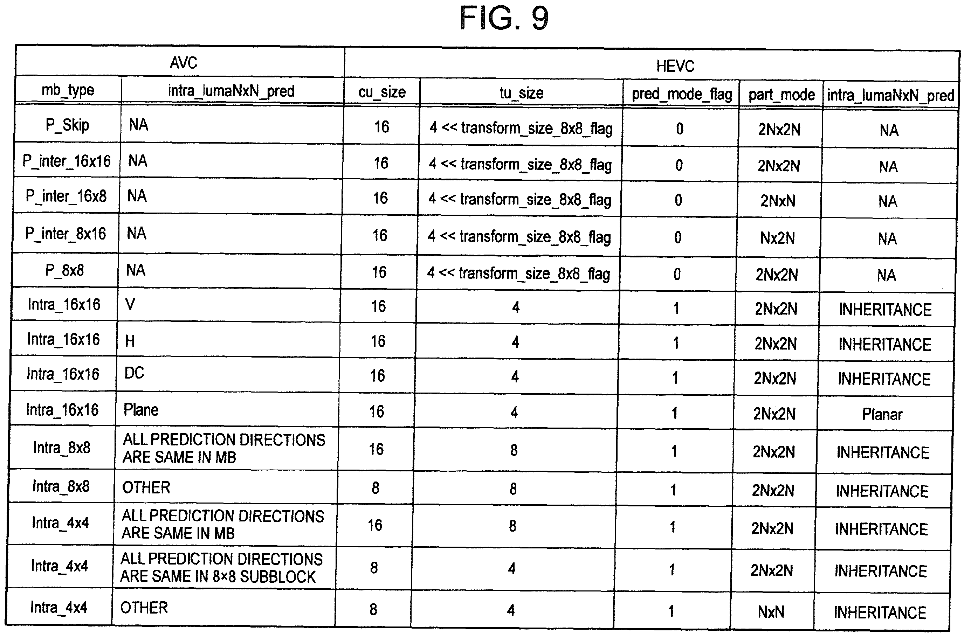

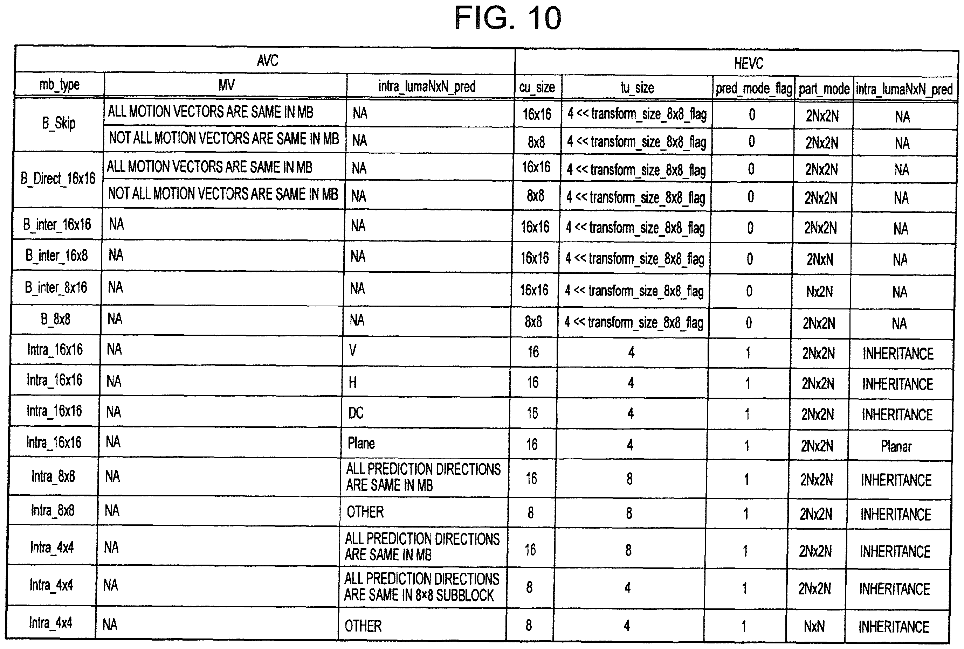

I_SLICE mapping depicted in Fig. 8, P_SLICE mapping depicted in Fig. 9, and B_SLICE mapping depicted in Fig. 10 each indicate rules for mapping (transcoding) AVCMBs to HEVCCBs by the coded data transcoder 104, depending on picture type.

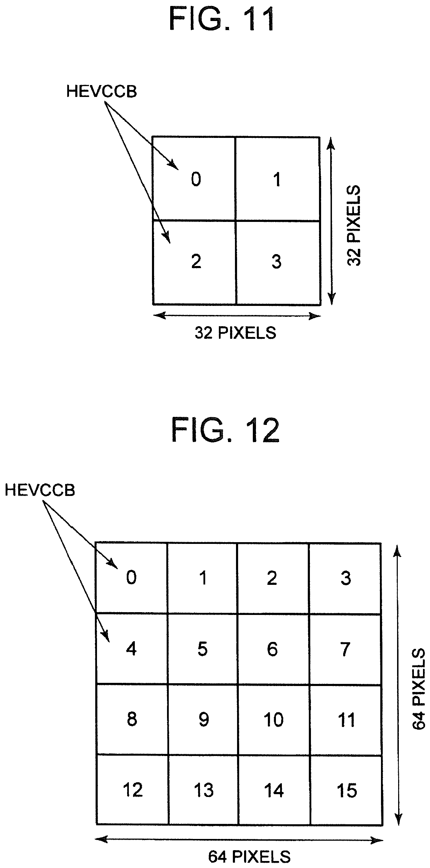

Next, in the case where part_mode of all adjacent four HEVCCBs depicted in Fig. 11 are $2N \times 2N$ and all of the HEVCCBs have the same cu_size, pred_mode_flag, and motion information (ref_idx_l0, ref_idx_l1, mv_l0, and mv_l1), the coded data transcoder 104 merges the four HEVCCBs. In detail, the coded data transcoder 104 updates cu_size of the four HEVCCBs to 32.

Further, in the case where part_mode of all adjacent 16 HEVCCBs depicted in Fig. 12 are $2N \times 2N$ and all of the HEVCCBs have the same cu_size, pred_mode_flag, and motion information (ref_idx_l0, ref_idx_l1, mv_l0, and mv_l1), the coded data transcoder 104 merges the 16 HEVCCBs. In detail, the coded data transcoder 104 updates cu_size of the 16 HEVCCBs to 64.

The coded data transcoder 104 also merges TUs. When transcoding an AVCMB to an HEVCCB, the coded data transcoder 104 determines tu_size of the HEVCCB based on transform_size_$8 \times 8$_flag of the AVCMB. Accordingly, tu_size of the HEVCCB is 4 or 8. This makes it impossible for the second video encoder 105 to use a TU larger than $8 \times 8$. In view of this, in the case where a frequency transform coefficient of a prediction error is not present in the macroblock ($16 \times 16$ pixel block), that is, in the case where cbp of the AVCMB is 0, the coded data transcoder 104 merges TUs as follows.

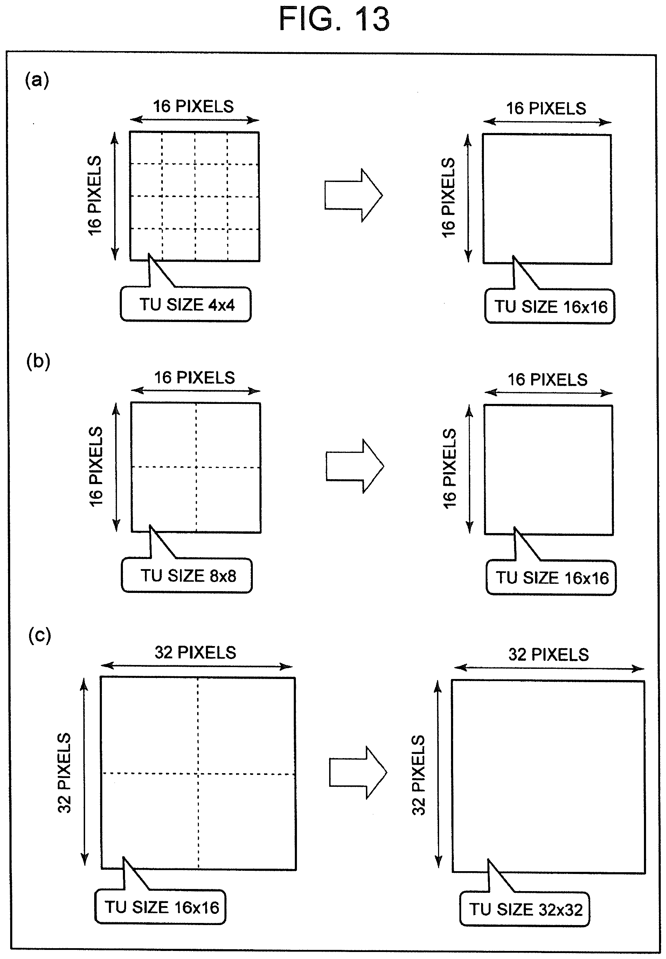

First, in the case where transform_size_$8 \times 8$_flag of the AVCMB is 0 and cbp of the AVCMB is 0, the coded data transcoder 104 merges TU as depicted in (a) in Fig. 13. In detail, the coded data transcoder 104 updates tu_size of the HEVCCB from 4 to 16. In the case where transform_size_$8 \times 8$_flag of the AVCMB is 1 and cbp of the AVCMB is 0, the coded data transcoder 104 merges TU as depicted in (b) in Fig. 13. In detail, the coded data transcoder 104 updates tu_size of the HEVCCB from 8 to 16.

By merging TUs in this way, tu_size of a block to be encoded in which no frequency transform coefficient is present, i.e. the prediction error signal has no steep change, is extended, enabling the second video encoder 105 to use a TU larger than $8 \times 8$. This improves the encoding efficiency in the second video encoder 105.

Moreover, in the case where cbp of adjacent four AVCMBs are 0, the coded data transcoder 104 updates tu_size of the HEVCCBs corresponding to the AVCMBs from 16 to 32, as depicted in (c) in Fig. 13. Here, since the largest TU size in HEVC is $32 \times 32$, even when cbp of all adjacent 16 AVCMBs are 0, the coded data transcoder 104 does not update tu_size of the HEVCCBs corresponding to the AVCMBs from 32 to 64. In other words, the coded data transcoder 104 does not update tu_size to a size larger than 32 when merging TU.

The second video encoder 105 encodes, according to HEVC, the size-extended input image supplied from the buffer 103 based on the HEVC coded data supplied from the coded data transcoder 104, and outputs a bitstream. The second video encoder 105 in this exemplary embodiment sets the input image src not to a multiple of the SCU but to a multiple of the macroblock size of the first video encoder 102, in order to enhance the reliability of the coded data of the first video encoder 102 for image boundaries.

The following describes the structure and operation of the second video encoder 105.

The second video encoder 105 includes a transformer/quantizer 1051, an inverse quantizer/inverse transformer 1052, a buffer 1053, a predictor 1054, an estimator (second estimator) 1055, and an entropy encoder 1056.

The estimator 1055 in the second video encoder 105 in this exemplary embodiment can determine split_cu_flag for each CTU, according to cu_size of the HEVC coded data. For example, in the case where cu_size = 64, split_cu_flag at CUDepth = 0 is set to 0. Likewise, the estimator 1055 can determine the intra prediction/inter prediction and PU partitioning shape of each CU, according to pred_mode_flag and part_mode of the HEVC coded data. The estimator 1055 can also determine the intra prediction direction, motion vector, etc. of each PU, according to pred_mode_flag and part_mode of the HEVC coded data. The estimator 1055 can equally determine split_tu_flag for each CU, according to tu_size of the HEVC coded data. Thus, the estimator 1055 does not need to exhaustively search for the coding parameters that minimize the coding cost J based on the Lagrange multiplier $\lambda$, unlike the estimator in the background art.

The predictor 1054 generates a prediction signal corresponding to the input image signal of each CU, based on the split_cu_flag syntax value, the pred_mode_flag syntax value, the part_mode syntax value, the split_tu_flag syntax value, the intra prediction direction, the motion vector, etc. determined by the estimator 1055. The prediction signal is generated based on the above-mentioned intra prediction or inter-frame prediction.

The transformer/quantizer 1051 frequency-transforms a prediction error image obtained by subtracting the prediction signal from the input image signal, based on the TU partitioning shape determined by the estimator 1055 according to tu_size of the HEVC coded data.

The transformer/quantizer 1051 further quantizes the frequency-transformed prediction error image (frequency transform coefficient).

The entropy encoder 1056 entropy-encodes the split_cu_flag syntax value, the pred_mode_flag syntax value, the part_mode syntax value, the split_tu_flag syntax value, the difference information of the intra prediction direction, and the difference information of the motion vector determined by the estimator 1055, and the transform quantization value.

The inverse quantizer/inverse transformer 1052 inverse-quantizes the transform quantization value. The inverse quantizer/inverse transformer 1052 further inverse-frequency-transforms the frequency transform coefficient obtained by the inverse quantization. The prediction signal is added to the reconstructed prediction error image obtained by the inverse frequency transform, and the result is supplied to the buffer 1053. The buffer 1053 stores the reconstructed image.

Based on the operation described above, the second video encoder 105 encodes, according to HEVC, the size-extended input image supplied from the buffer 103 based on the HEVC coded data supplied from the coded data transcoder 104, and outputs a bitstream.

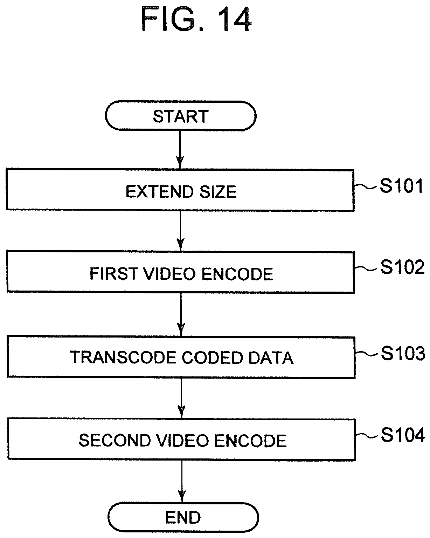

The following describes the operation of the video encoding device in this exemplary embodiment, with reference to a flowchart in Fig. 14.

In step S101, the size extender 101 size-extends the input image to a multiple of 16 which is the macroblock size of the first video encoder 102.

In step S102, the first video encoder 102 encodes the size-extended input image according to AVC.

In step S103, the coded data transcoder 104 transcodes the AVCMB of each macroblock of the size-extended input image to the HEVCCB, and further merges HEVCCBs. The coded data transcoder 104 also merges TUs.

In step S104, the second video encoder 105 encodes, according to HEVC, the size-extended input image supplied from the buffer 103 based on the HEVC coded data supplied from the coded data transcoder 104, and outputs a bitstream.

In the video encoding device in this exemplary embodiment described above, the load of the video encoding process for determining the split_cu_flag syntax value, the pred_mode_flag syntax value, the part_mode syntax value, the split_tu_flag syntax value, the intra prediction direction, the motion vector, etc. is distributed between the first video encoder 102 and the second video encoder 105, thus reducing the concentration of the load of the video encoding process.

Though the first video encoder 102 is an AVC video encoder in this exemplary embodiment, the AVC video encoder is an example. The first video encoder 102 may be an HEVC video encoder supporting $16 \times 16$ pixel CTUs. In this case, the coded data transcoder 104 skips the above-mentioned process of transcoding AVC coded data to HEVC coded data.

Moreover, in the case where adjacent four HEVCCBs satisfy all of the following $32 \times 32$ $2N \times N$ conditions, the coded data transcoder 104 in this exemplary embodiment may update cu_size and part_mode of the four HEVCCBs respectively to 32 and $2N \times N$.

[$32 \times 32$ $2N \times N$ conditions]

- part_mode of all HEVCCBs are $2N \times 2N$.
- cu_size of all HEVCCBs are the same.
- pred_mode_flag of all HEVCCBs are 0.
- The motion information of all HEVCCBs are not the same.
- The motion information of upper two HEVCCBs are the same.
- The motion information of lower two HEVCCBs are the same.

Likewise, in the case where adjacent four HEVCCBs satisfy all of the following $32 \times 32$ $N \times 2N$ conditions, the coded data transcoder 104 in this exemplary embodiment may update cu_size and part_mode of the four HEVCCBs respectively to 32 and $N \times 2N$.

[$32 \times 32$ $N \times 2N$ conditions]

- part_mode of all HEVCCBs are $2N \times 2N$.
- cu size of all HEVCCBs are the same.
- pred_mode_flag of all HEVCCBs are 0.
- The motion information of all HEVCCBs are not the same.
- The motion information of left two HEVCCBs are the same.
- The motion information of right two HEVCCBs are the same.

Further, in the case where adjacent 16 HEVCCBs satisfy all of the following 64×64 2N×N conditions, the coded data transcoder 104 in this exemplary embodiment may update cu_size and part_mode of the 16 HEVCCBs respectively to 64 and 2N×N.

[64×64 2N×N conditions]

- part_mode of all HEVCCBs are 2N×2N.
- cu_size of all HEVCCBs are the same.
- pred_mode_flag of all HEVCCBs are 0.
- The motion information of all HEVCCBs are not the same.
- The motion information of upper eight HEVCCBs are the same.
- The motion information of lower eight HEVCCBs are the same.

Likewise, in the case where adjacent 16 HEVCCBs satisfy all of the following 64×64 N×2N conditions, the coded data transcoder 104 in this exemplary embodiment may update cu_size and part_mode of the 16 HEVCCBs respectively to 64 and N×2N.

[64×64 N×2N conditions]

- part_mode of all HEVCCBs are 2N×2N.
- cu_size of all HEVCCBs are the same.
- pred_mode_flag of all HEVCCBs are 0.
- The motion information of all HEVCCBs are not the same.
- The motion information of left eight HEVCCBs are the same.
- The motion information of right eight HEVCCBs are the same.

Exemplary Embodiment 2

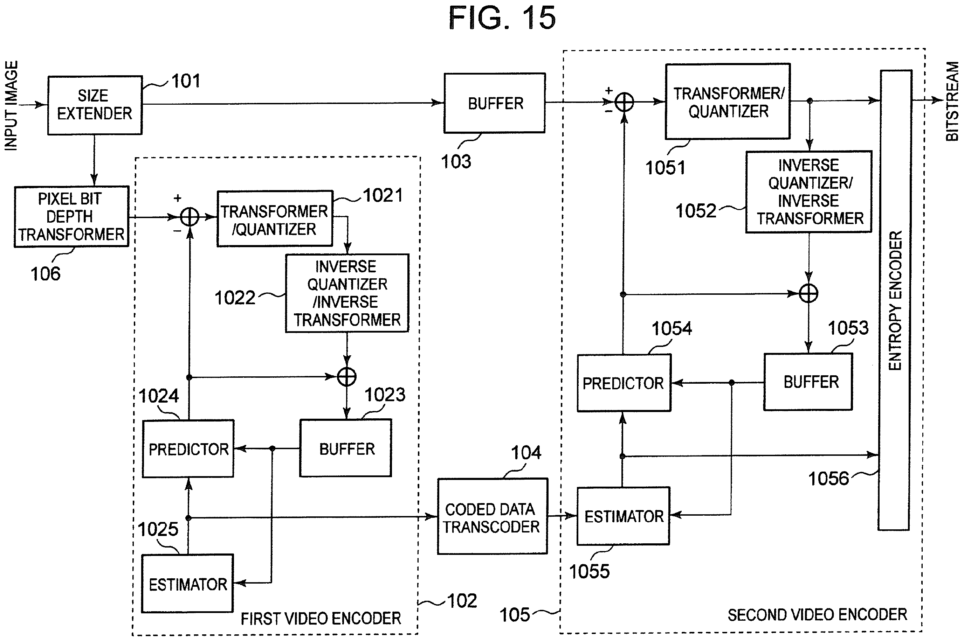

Fig. 15 is a block diagram depicting the structure of a video encoding device in Exemplary Embodiment 2 supporting 4:2:0 10-bit input format, where a first video encoder 102 is an AVC video encoder supporting 4:2:0 8-bit input format and a second video encoder 105 is an HEVC video encoder.

The video encoding device in this exemplary embodiment includes a size extender 101, a pixel bit depth transformer 106, the first video encoder 102, a buffer 103, a coded data transcoder 104, and the second video encoder 105.

The size extender 101 size-extends the width src_pic_width and height src_pic_height of a 4:2:0 10-bit input image src to a multiple of 16. For example, in the case where (src_pic_width, src_pic_height) = (1920, 1080), the extended width e_src_pic_width and height e_src_pic_height of the input image are (e_src_pic_width, e_src_pic_height) = (1920, 1088). A pixel value in a size-extended area may be a copy of a pixel value of a boundary of the input image or a predetermined pixel value (e.g. 512 representing gray).

The pixel bit depth transformer 106 transforms the 4:2:0 10-bit input image size-extended to a multiple of 16, which is supplied from the size extender 101, to 4:2:0 8-bit. In the bit depth transformation, the 2 LSBs may be dropped by right shift, or subjected to rounding.

The first video encoder 102 encodes the input image size-extended to a multiple of 16 and transformed to 4:2:0 8-bit according to AVC, as in Exemplary Embodiment 1.

The coded data transcoder 104 transcodes the AVC coded data of each macroblock of the input image size-extended to a multiple of 16 and transformed to 4:2:0 8-bit, which is supplied from the pixel bit depth transformer 106, to an HEVCCB.

Next, in the case where part_mode of all adjacent four HEVCCBs are 2N×2N and all of the HEVCCBs have the same cu_size, pred_mode_flag, and motion information (ref_idx_10, ref_idx_l1, mv_10, and mv_l1), the coded data transcoder 104 merges the four HEVCCBs, as in Exemplary Embodiment 1.

Further, in the case where part mode of all adjacent 16 HEVCCBs are 2N×2N and all of the HEVCCBs have the same cu_size, pred_mode_flag, and motion information (ref_idx_10, ref_idx_l1, mv_10, and mv_11), the coded data transcoder 104 merges the 16 HEVCCBs, as in Exemplary Embodiment 1.

The coded data transcoder 104 also merges TUs, as in Exemplary Embodiment 1.

The second video encoder 105 encodes, according to HEVC, the 4:2:0 10-bit input image src extended to a multiple of 16 and supplied from the buffer 103 based on the HEVC coded data supplied from the coded data transcoder 104, and outputs a bitstream, as in Exemplary Embodiment 1.

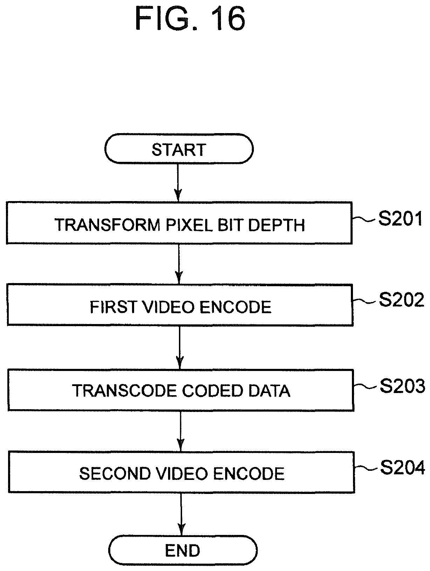

The following describes the operation of the video encoding device in this exemplary embodiment, with reference to a flowchart in Fig. 16.

In step S201, the pixel bit depth transformer 106 transforms the 4:2:0 10-bit input image size-extended to a multiple of 16, which is supplied from the size extender 101, to 4:2:0 8-bit.

In step S202, the first video encoder 102 encodes the input image size-extended to a multiple of 16 and transformed to 4:2:0 8-bit, according to AVC.

In step S203, the coded data transcoder 104 transcodes the AVCMB of each macroblock of the input image size-extended to a multiple of 16 and transformed to 4:2:0 8-bit to the HEVCCB, and merges HEVCCBs. The coded data transcoder 104 also merges TUs.

In step S204, the second video encoder 105 encodes, according to HEVC, the 4:2:0 10-bit input image extended to a multiple of 16 and supplied from the buffer 103 based on the HEVC coded data supplied from the coded data transcoder 104, and outputs a bitstream.

Based on the operation described above, the video encoding device in this exemplary embodiment generates a bitstream for 4:2:0 10-bit input format.

In the video encoding device in this exemplary embodiment described above, the load of the video encoding process for determining the split_cu_flag syntax value, the pred_mode_flag syntax value, the part_mode syntax value, the split_tu_flag syntax value, the intra prediction direction, the motion vector, etc. is distributed between the first video encoder 102 and the second video encoder 105, thus reducing the concentration of the load of the video encoding process.

Though the first video encoder 102 is an AVC video encoder supporting 4:2:0 8-bit input format in this exemplary embodiment, the AVC video encoder is an example. The first video encoder 102 may be an HEVC video encoder supporting 4:2:0 8-bit input format. In this case, the coded data transcoder 104 skips the above-mentioned process of transcoding AVC coded data to HEVC coded data and merging process for HEVC coded data.

Though the pixel bit depth transformer 106 reduces the pixel bit depth of the input image size-extended to a multiple of 16 and supplied from the size extender 101 in this exemplary embodiment, the pixel bit depth transformer 106 may reduce the pixel bit depth of the input image input to the video encoding device. The size extender 101 is omitted in such a case.

Exemplary Embodiment 3

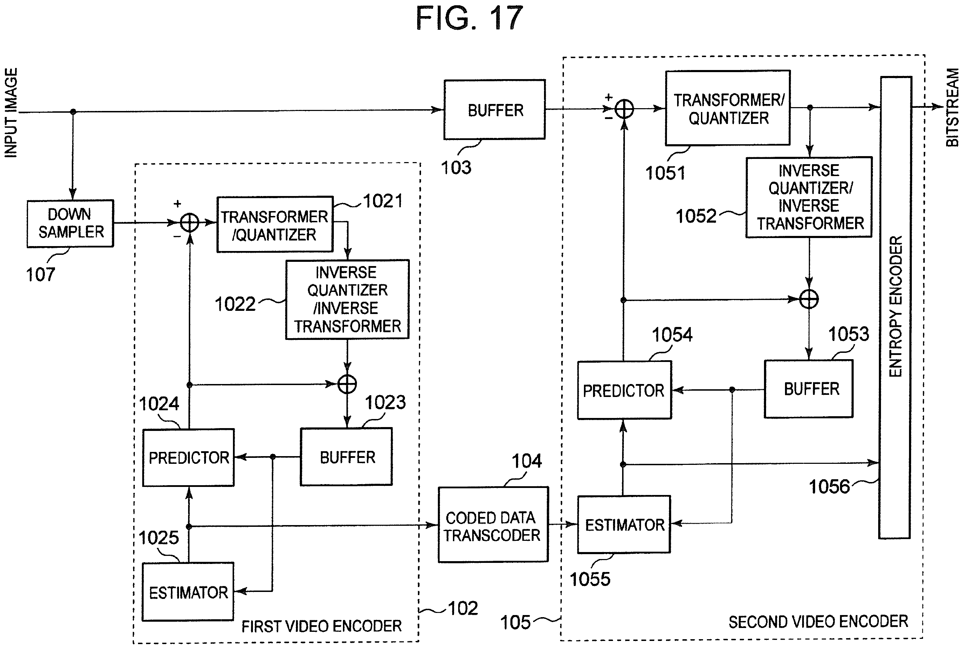

Fig. 17 is a block diagram depicting the structure of a video encoding device in Exemplary Embodiment 3 supporting 2160p (4K) input format of the high definition television (HDTV) standard. In Exemplary Embodiment 3, a first video encoder 102 is an AVC video encoder supporting 1080p (2K) input format, and a second video encoder 105 is an HEVC video encoder. In other words, the spatial resolution that can be supported by the first video encoder 102 is less than the spatial resolution in the second video encoder 105.

The video encoding device in this exemplary embodiment includes a down sampler 107, the first video encoder 102, a buffer 103, a coded data transcoder 104, and the second video encoder 105.

The down sampler 107 reduces a 2160p input image src (src_pic_width = 3840, src_pic_height = 2160) to 1080p (src_pic_width = 1920, src_pic_height = 1080). The down sampler 107 further extends the width src_pic_width and height src_pic_height of the input image reduced to 1080p, to a multiple of 16. A pixel value in an extended area may be a copy of a pixel value of a boundary of the input image reduced to 1080p, or a predetermined pixel value (e.g. 128 representing gray (in the case where the input image is an 8-bit image)).

The first video encoder 102 encodes the input image reduced to 1080p and extended to a multiple of 16, which is supplied from the down sampler 107, according to AVC, as in Exemplary Embodiment 1

The coded data transcoder 104 transcodes the AVC coded data of each macroblock of the input image reduced to 1080p and extended to a multiple of 16, which is supplied from the down sampler 107, to an HEVCCB, as in Exemplary Embodiment 1. Here, the coded data transcoder 104 in this exemplary embodiment doubles cu_size, tu_size, and the horizontal component value and vertical component value of the motion vector of the motion information, given that the input image to the first video encoder 102 is half in horizontal resolution and vertical resolution with respect to the input image to the second video encoder 105.

Next, in the case where part_mode of all adjacent four HEVCCBs are 2N×2N and all of the HEVCCBs have the same cu_size, pred_mode_flag, and motion information (ref_idx_10, ref_idx_l1, mv_10, and mv_l1), the coded data transcoder 104 merges the four HEVCCBs, as in Exemplary Embodiment 1. In detail, the coded data transcoder 104 updates cu_size of the four HEVCCBs to 64, given that the input image to the first video encoder 102 is half in horizontal resolution and vertical resolution with respect to the input image to the second video encoder 105.

The coded data transcoder 104 also merges TUs, as in Exemplary Embodiment 1. Here, in the case where cbp of the AVCMB is 0, the coded data transcoder 104 updates tu_size of the HEVCCB to 32, given that the input image to the first video encoder 102 is half in horizontal resolution and vertical resolution with respect to the input image to the second video encoder 105.

Since the largest TU size in HEVC is 32×32, even when cbp of the adjacent AVCMBs are 0, the coded data transcoder 104 does not update tu_size of the HEVCCBs to a size larger than 32.

The second video encoder 105 encodes, according to HEVC, the 2160p input image supplied from the buffer 103 based on the HEVC coded data supplied from the coded data transcoder 104, and outputs a bitstream, as in Exemplary Embodiment 1.

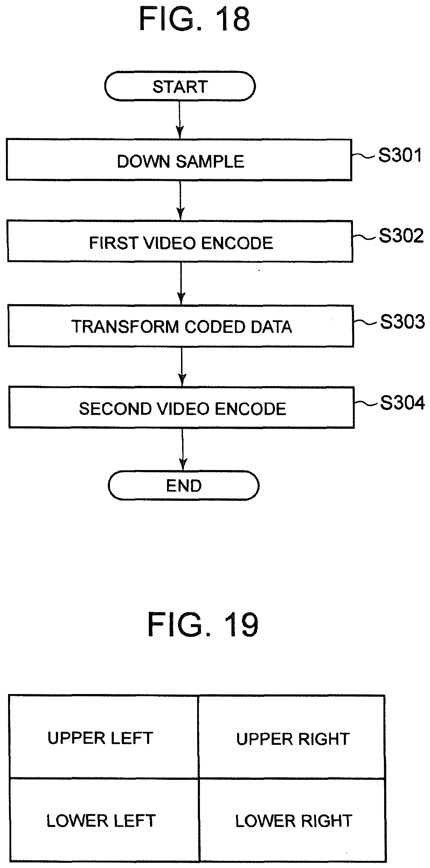

The following describes the operation of the video encoding device in this exemplary embodiment, with reference to a flowchart in Fig. 18.

In step S301, the down sampler 107 reduces the 2160p input image to 1080p, and size-extends the width and height of the input image reduced to 1080p, to a multiple of 16.

In step S302, the first video encoder 102 encodes the input image reduced to 1080p and extended to a multiple of 16, which is supplied from the down sampler 107, according to AVC.

In step S303, the coded data transcoder 104 transcodes the AVC coded data of each macroblock of the input image reduced to 1080p and extended to a multiple of 16, which is supplied from the down sampler 107, to the HEVCCB, and further merges HEVCCBs. The coded data transcoder 104 also merges TUs.

In step S304, the second video encoder 105 encodes, according to HEVC, the 2160p input image supplied from the buffer 103 based on the HEVC coded data supplied from the coded data transcoder 104, and outputs a bitstream.

In the video encoding device in this exemplary embodiment described above, the load of the video encoding process for determining the split_cu_flag syntax value, the pred_mode_flag syntax value, the part_mode syntax value, the split_tu_flag syntax value, the intra prediction direction, the motion vector, etc. is distributed between the first video encoder 102 and the second video encoder 105, thus reducing the concentration of the load of the video encoding process.

The second video encoder 105 in this exemplary embodiment may further search for a motion vector in a range of ± 1 around the motion vector of the HEVC coded data, given that the horizontal component value and vertical component value of the motion vector are doubled.

Moreover, the second video encoder 105 in this exemplary embodiment may encode the 2160p input image src not with a multiple of the SCU but with a multiple of the macroblock size (a multiple of 32) of the first video encoder 102, in order to enhance the reliability of the coded data of the first video encoder 102 for image boundaries.

Though the video encoding device supporting 2160p (4K) input format is described as an example in this exemplary embodiment, 4320p (8K) input format can also be supported by the same structure. In this case, when transcoding the AVC coded data to the HEVC coded data, the coded data transcoder 104 quadruples cu_size, tu_size, and the horizontal component value and vertical component value of the motion vector of the motion information, given that the horizontal resolution and the vertical resolution are 1/4. The coded data transcoder 104 also skips the above-mentioned merging process for HEVC coded data, given that 16×16 pixels in 1080p correspond to 64×64 pixels in 4320p.

Though the input image is encoded using a combination of one first video encoding means and one second video encoding means in each of the foregoing exemplary embodiments, the present invention is also applicable to, for example, a video encoding device that divides the input image into four screens as depicted in Fig. 19 and processes the four divided screens in parallel using four first video encoders and four second video encoders.

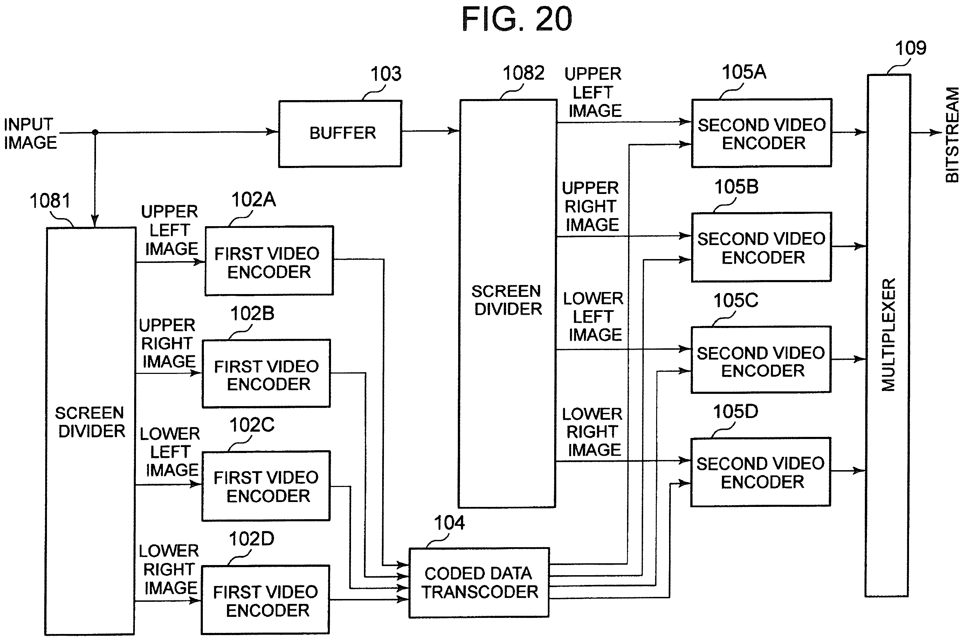

Fig. 20 is a block diagram depicting a structural example of a video encoding device for processing divided screens in parallel. The video encoding device depicted in Fig. 20 includes: a screen divider 1081 for dividing an input image into four screens; first video encoders 102A ,102B, 102C, and 102D for encoding the respective divided screens; a buffer 103; a coded data transcoder 104; a screen divider 1082 for dividing an input image supplied from the buffer 103 into four screens; second video encoders 105A, 105B, 105C, and 105D for encoding the respective divided screens; and a multiplexer 109 for multiplexing coded data from the second video encoders 105A, 105B, 105C, and 105D and outputting a bitstream.

The functions of the first video encoders 102A ,102B, 102C, and 102D are the same as the function of the first video encoder 102 in each of the foregoing exemplary embodiments. The functions of the second video encoders 105A, 105B, 105C, and 105D are the same as the function of the second video encoder 105 in each of the foregoing exemplary embodiments.

The functions of the buffer 103 and the coded data transcoder 104 are the same as the functions in each of the foregoing exemplary embodiments. In this exemplary embodiment, however, the coded data transcoder 104 respectively transcodes coded data output from the four first video encoders 102A ,102B, 102C, and 102D and supplies the transcoded data to the second video encoders 105A, 105B, 105C, and 105D.

Though the second video encoder 105 encodes the input image in each of the foregoing exemplary embodiments, the present invention is also applicable to a video encoding device for transcoding an input bitstream.

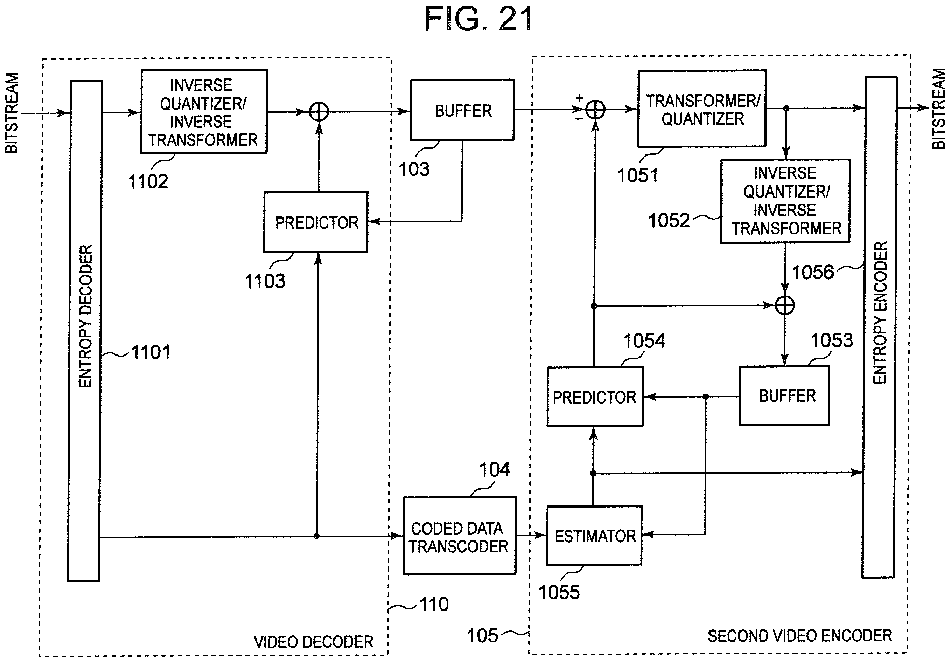

Fig. 21 is a block diagram depicting a structural example of a video encoding device for transcoding an input bitstream. As depicted in Fig. 21, the first video encoder 102 has been replaced by a video decoder 110, and the video decoder 110 decodes the bitstream and the second video encoder 105 encodes the decoded image stored in the buffer 103.

The video decoder 110 includes an entropy decoder 1101 for entropy-decoding a prediction parameter and a transform quantization value included in the bitstream and supplying the results to the inverse quantizer/inverse transformer 1102 and the predictor 1103. The inverse quantizer/inverse transformer 1102 inverse-quantizes the transform quantization value, and inverse-frequency-transforms the frequency transform coefficient obtained by the inverse quantization. The predictor 1103 generates a prediction signal using a reconstructed image stored in the buffer 103, based on the entropy-decoded prediction parameter.

The functions of the buffer 103, the coded data transcoder 104, and the second video encoder 105 are the same as the functions in each of the foregoing exemplary embodiments.

Each of the foregoing exemplary embodiments may be realized by hardware or a computer program.

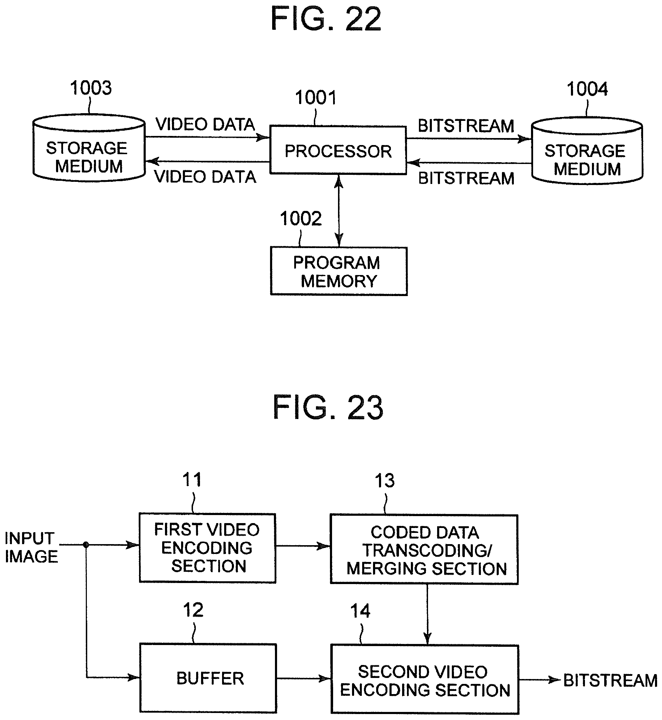

An information processing system depicted in Fig. 22 includes a processor 1001, a program memory 1002, a storage medium 1003 for storing video data, and a storage medium 1004 for storing a bitstream. The storage medium 1003 and the storage medium 1004 may be separate storage media, or storage areas included in the same storage medium. A magnetic storage medium such as a hard disk is available as a storage medium.

In the information processing system depicted in Fig. 22, a program for realizing the functions of the blocks (except the buffer block) depicted in each of the drawings of the exemplary embodiments is stored in the program memory 1002. The processor 1001 realizes the functions of the video encoding device described in each of the foregoing exemplary embodiments, by executing processes according to the program stored in the program memory 1002.

Fig. 23 is a block diagram depicting main parts of a video encoding device according to the present invention. As depicted in Fig. 23, the video encoding device includes: a first video encoding section 11 (e.g. the first video encoder 102 depicted in Fig. 1) for encoding an input image to generate first coded data; a buffer 12 (e.g. the buffer 1023 depicted in Fig. 1) for storing the input image; a coded data transcoding/merging section 13 (e.g. the coded data transcoder 104 depicted in Fig. 1) for transcoding and then merging the first coded data generated by the first video encoding section 11, to generate second coded data; and a second video encoding section 14 (e.g. the second video encoder 105 depicted in Fig. 1) for encoding the input image stored in the buffer 12 based on the second coded data supplied from the coded data transcoding/merging section 13, to generate a bitstream. The first video encoding section 11 has a function of handling a first encoding processing different from a second encoding processing handled by the second video encoding section 14. The coded data transcoding/merging section 13 transcodes coded data by the first encoding processing to coded data corresponding to the second encoding processing and, in the case where a predetermined condition is met when transcoding is performed, merges frequency transform/quantization blocks (e.g. TUs) in the second encoding processing. In particular, the predetermined condition is that all frequency transform coefficients of the first coded data are 0. In particular, the coded data transcoding/merging section 13 merges the frequency transform/quantization blocks in the second encoding processing, within a range that does not exceed a block size corresponding to the second encoding processing. In particular, the coded data transcoding/merging section 13 determines whether or not all frequency transform coefficients of the first coded data are 0, based on coded block pattern (cbp) of the first coded data according to H.264/AVC standard.

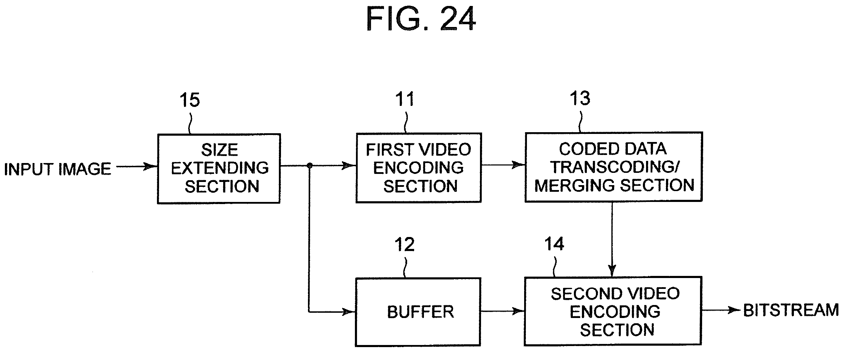

Fig. 24 is a block diagram depicting main parts of another video encoding device according to the present invention. As depicted in Fig. 24, the video encoding device may further include a size extending section 15 for extending a size of the input image to a multiple of the largest CU size supported by the first video encoding section 11, wherein the first video encoding section 11 encodes the input image size-extended by the size extending section 15 (e.g. the size extender 101 depicted in Fig. 15) to generate the first coded data, and wherein the buffer 12 stores the input image size-extended by the size extending section 15. The largest CU size supported by the first video encoding section 11 is less than or equal to the largest CU size supported by the second video encoding section 14.

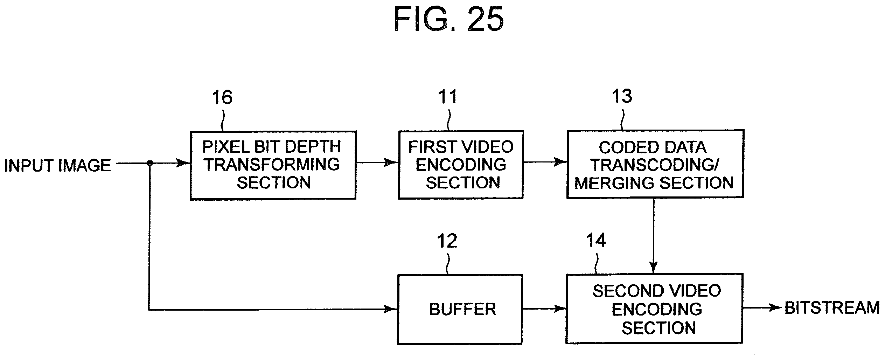

Fig. 25 is a block diagram depicting main parts of another video encoding device according to the present invention. As depicted in Fig. 25, the video encoding device may further include a pixel bit depth transforming section 16 for reducing a pixel bit depth of the input image, wherein the first video encoding section 11 encodes the input image with the pixel bit depth reduced by the pixel bit depth transforming section 16. The pixel bit depth supported by the first video encoding section 11 is less than or equal to the pixel bit depth supported by the second video encoding section 14.

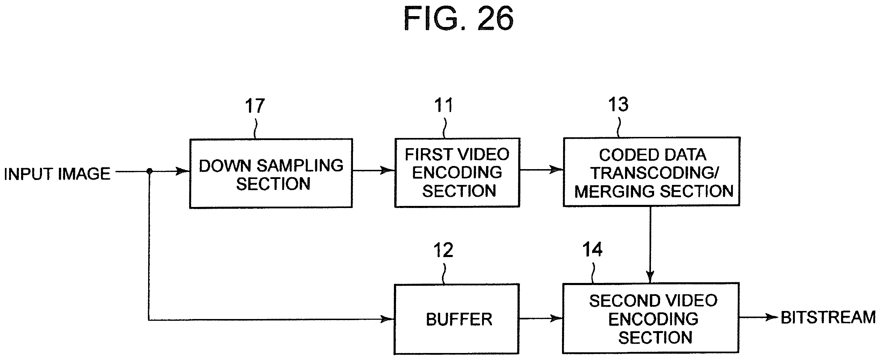

Fig. 26 is a block diagram depicting main parts of another video encoding device according to the present invention. As depicted in Fig. 26, the video encoding device may further include a down sampling section 17 for reducing spatial resolution of the input image, wherein the first video encoding section 11 encodes the input image with the spatial resolution reduced by the down sampling section 17 to generate the first coded data, and wherein the coded data transcoding/merging section 13 generates the second coded data based on a ratio in spatial resolution of video encoded by the first video encoding section 11 and video encoded by the second video encoding section 14. The spatial resolution supported by the first video encoding section 11 is less than or equal to the spatial resolution supported by the second video encoding section 14.

While the present invention has been described with reference to the exemplary embodiments and examples, the present invention is not limited to the aforementioned exemplary embodiments and examples. Various changes understandable to those skilled in the art within the scope of the present invention can be made to the structures and details of the present invention.

This application claims priority based on Japanese Patent Application No. 2014-023088 filed on February 10, 2014.

Reference Signs List

| | |
|---|---|
| 11 | first video encoding section |
| 12, 103, 1023, 1053 | buffer |
| 13 | coded data transcoding/merging section |
| 14 | second video encoding section |
| 15 | size extending section |
| 16 | pixel bit depth transforming section |
| 17 | down sampling section |
| 101 | size extender |
| 102, 102A, 102B, 102C, 102D | first video encoder |
| 104 | coded data transcoder |
| 105, 105A, 105B, 105C, 105D | second video encoder |
| 106 | pixel bit depth transformer |
| 107 | down sampler |
| 109 | multiplexer |
| 110 | video decoder |
| 1001 | processor |
| 1002 | program memory |
| 1003, 1004 | storage medium |
| 1021, 1051 | transformer/quantizer |
| 1022, 1052, 1102 | inverse quantizer/inverse transformer |
| 1024, 1054, 1103 | predictor |
| 1025, 1055 | estimator |
| 1056 | entropy encoder |
| 1081, 1082 | screen divider |
| 1101 | entropy decoder |

**Claims**

1. A video encoding device comprising:

first video encoding means (11) for encoding an input image based on a first encoding standard to generate a first parameter that includes at least block size information;
a buffer (12) for storing the input image;
a merging means (13) for changing the first parameter generated by the first video encoding means (11), to generate second parameter that includes at least block size information based on a second encoding standard that is different from the first encoding standard; and
second video encoding means (14) for encoding the input image stored in the buffer (12) using the second parameter supplied from the merging means (13), to encode the input image for generating a bitstream,
wherein the first video encoding means (11) has a function of handling a first encoding process included in a second encoding process handled by the second video encoding means (14), and
wherein the merging means (13) changes the first parameter by the first encoding process to the second parameter corresponding to the second encoding process and, in the case where all frequency transform coefficients in the first encoding process are 0, merges blocks in the second encoding process by changing the first parameter to the second parameter.

2. The video encoding device according to claim 1, wherein the merging means (13) merges the blocks in the second encoding process, on condition that merged block size does not exceed a block size corresponding to the second encoding process.

3. The video encoding device according to claim 2, wherein the merging means (13) determines whether or not all frequency transform coefficients in the first encoding process are 0, by judging coded block pattern (cbp) included in the first parameter according to H.264/AVC standard.

4. A video encoding method comprising:

encoding an input image based on a first encoding standard to generate a first parameter that includes at least block size information;
storing the input image in a buffer (12) for storing the input image;
changing the first parameter, to generate second parameter that includes at least block size information based on a second encoding standard that is different from the first encoding standard; and
encoding the input image stored in the buffer (12) using the second parameter to encode the input image for generating a bitstream, using means (14) having a function of handling a second encoding process that includes a first encoding process handled by means (11) for generating the first parameter,
wherein when generating the second coded data, the first parameter by the first encoding process is changed to the second parameter corresponding to the second encoding process and, in the case where all frequency transform coefficients in the first encoding process are 0, blocks in the second encoding process are merged by changing the first parameter to the second parameter.

5. The video encoding method according to claim 4, wherein the blocks in the second encoding process are merged on condition that merged block size does not exceed a block size corresponding to the second encoding process.

6. The video encoding method according to claim 5, wherein whether or not all frequency transform coefficients in the first encoding process are 0 is determined by judging coded block pattern (cbp) in the first parameter according to H.264/AVC standard.

7. A video encoding program for causing a computer to execute:

a process of encoding an input image based on a first encoding standard to generate a first parameter that includes at least block size information;
a process of storing the input image in a buffer (12) for storing the input image;
a process of changing the first parameter, to generate second parameter that includes at least block size information based on a second encoding standard that is different from the first encoding standard; and
a process of encoding the input image stored in the buffer (12) using the second parameter to encode the input image for generating a bitstream, by a process of handling a second encoding process that includes a first encoding process handled in the process of generating the first parameter,
wherein the video encoding program causes the computer to, when generating the second coded data, change the first parameter by the first encoding process to the second parameter corresponding to the second encoding process and, in the case where all frequency transform coefficients in the first encoding process are 0, merge blocks in the second encoding process by changing the first parameter to the second parameter.

8. The video encoding program according to claim 7, causing the computer to merge the blocks in the second encoding process on condition that merged block size does not exceed a block size corresponding to the second encoding process.

9. The video encoding program according to claim 8, causing the computer to determine whether or not all frequency transform coefficients in the first encoding process are 0 by judging coded block pattern (cbp) in the first parameter according to H.264/AVC standard.

**Patentansprüche**

1. Videokodierungsvorrichtung, die aufweist:

eine erste Videokodierungseinrichtung (11) zum Kodieren eines Eingangsbilds basierend auf einem ersten Kodierungsstandard, um einen ersten Parameter zu erzeugen, der wenigstens Blockgrößeninformationen umfasst;
einen Puffer (12) zum Speichern des Eingangsbilds;

eine Vereinigungseinrichtung (13) zum Ändern des von der ersten Videokodierungseinrichtung (11) erzeugten ersten Parameters, um basierend auf einem zweiten Kodierungsstandard, der verschieden zu dem ersten Kodierungsstandard ist, einen zweiten Parameter zu erzeugen, der wenigstens Blockgrößeninformationen umfasst; und

eine zweite Videokodierungseinrichtung (14) zum Kodieren des in dem Puffer (12) gespeicherten Eingangsbilds unter Verwendung des von der Vereinigungseinrichtung (13) gelieferten zweiten Parameters, um das Eingangsbild zum Erzeugen eines Bitstroms zu kodieren, wobei die erste Videokodierungseinrichtung (11) eine Funktion zum Handhaben eines ersten Kodierungsverfahrens hat, das in einem zweiten Kodierungsverfahren enthalten ist, das von der zweiten Videokodierungseinrichtung (14) gehandhabt wird, und wobei die Vereinigungseinrichtung (13) den ersten Parameter durch das erste Kodierungsverfahren in den zweiten Parameter ändert, der dem zweiten Kodierungsverfahren entspricht, und in dem Fall, in dem alle Frequenztransformationskoeffizienten in dem ersten Kodierungsverfahren 0 sind, Blöcke in dem zweiten Kodierungsverfahren vereinigt, indem sie den ersten Parameter in den zweiten Parameter ändert.

2. Videokodierungsvorrichtung nach Anspruch 1, wobei die Vereinigungseinrichtung (13) die Blöcke in dem zweiten Kodierungsverfahren unter der Bedingung vereinigt, dass die vereinigte Blockgröße eine Blockgröße, die dem zweiten Kodierungsverfahren entspricht, nicht überschreitet.

3. Videokodierungsvorrichtung nach Anspruch 2, wobei die Vereinigungseinrichtung (13) bestimmt, ob alle Frequenztransformationskoeffizienten in dem ersten Kodierungsverfahren 0 sind oder nicht, indem sie das in dem ersten Parameter enthaltene kodierte Blockmuster (cbp) gemäß dem H.264/AVC-Standard beurteilt.

4. Videokodierungsverfahren, das aufweist:

Kodieren eines Eingangsbilds basierend auf einem ersten Kodierungsstandard, um einen ersten Parameter zu erzeugen, der wenigstens Blockgrößeninformationen umfasst;
Speichern des Eingangsbilds in einem Puffer (12) zum Speichern des Eingangsbilds;
Ändern des ersten Parameters, um basierend auf einem zweiten Kodierungsstandard, der verschieden zu dem ersten Kodierungsstandard ist, einen zweiten Parameter zu erzeugen, der wenigstens Blockgrößeninformationen umfasst; und
Kodieren des in dem Puffer (12) gespeicherten Eingangsbilds unter Verwendung des zweiten Parameters, um das Eingangsbild zum Erzeugen eines Bitstroms zu kodieren, unter Verwendung von Einrichtungen (14) mit einer Funktion zum Handhaben eines zweiten Kodierungsverfahrens, das ein erstes Kodierungsverfahren umfasst, welches von Einrichtungen (11) zum Erzeugen des ersten Parameters gehandhabt wird,
wobei, wenn die zweiten kodierten Daten erzeugt werden, der erste Parameter durch das erste Kodierungsverfahren in den zweiten Parameter, der dem zweiten Kodierungsverfahren entspricht, geändert wird, und in dem Fall, in dem alle Frequenztransformationskoeffizienten in dem ersten Kodierungsverfahren 0 sind, Blöcke in dem zweiten Kodierungsverfahren vereinigt werden, indem der erste Parameter in den zweiten Parameter geändert wird.

5. Videokodierungsverfahren nach Anspruch 4, wobei die Blöcke in dem zweiten Kodierungsverfahren unter der Bedingung vereinigt werden, dass die vereinigte Blockgröße eine Blockgröße, die dem zweiten Kodierungsverfahren entspricht, nicht überschreitet.

6. Videokodierungsverfahren nach Anspruch 5, wobei bestimmt wird, ob alle Frequenztransformationskoeffizienten in dem ersten Kodierungsverfahren 0 sind oder nicht, indem das in dem ersten Parameter enthaltene kodierte Blockmuster (cbp) gemäß dem H.264/AVC-Standard beurteilt wird.

7. Videokodierungsprogramm, um zu bewirken, dass ein Computer ausführt:

ein Verfahren zum Kodieren eines Eingangsbilds basierend auf einem ersten Kodierungsstandard, um einen ersten Parameter zu erzeugen, der wenigstens Blockgrößeninformationen umfasst;
ein Verfahren zum Speichern des Eingangsbilds in einem Puffer (12) zum Speichern des Eingangsbilds;
ein Verfahren zum Ändern des ersten Parameters, um basierend auf einem zweiten Kodierungsstandard, der verschieden zu dem ersten Kodierungsstandard ist, einen zweiten Parameter zu erzeugen, der wenigstens Blockgrößeninformationen umfasst; und
ein Verfahren zum Kodieren des in dem Puffer (12) gespeicherten Eingangsbilds unter Verwendung des zweiten Parameters, um das Eingangsbild zum Erzeugen eines Bitstroms durch ein Verfahren zum Handhaben eines zweiten Kodierungsverfahrens zu kodieren, welches ein erstes Kodierungsverfahren umfasst, das in dem Verfahren zum Erzeugen des ersten Parameters gehandhabt wird,

wobei das Videokodierungsprogramm bewirkt, dass der Computer, wenn er die zweiten kodierten Daten erzeugt, den ersten Parameter durch das erste Kodierungsverfahren in den zweiten Parameter ändert, der dem zweiten Kodierungsverfahren entspricht, und in dem Fall, in dem alle Frequenztransformationskoeffizienten in dem ersten Kodierungsverfahren 0 sind, Blöcke in dem zweiten Kodierungsverfahren vereinigt, indem er den ersten Parameter in den zweiten Parameter ändert.

8. Videokodierungsprogramm nach Anspruch 7, das bewirkt, dass der Computer die Blöcke in dem zweiten Kodierungsverfahren unter der Bedingung vereinigt, dass die vereinigte Blockgröße eine Blockgröße, die dem zweiten Kodierungsverfahren entspricht, nicht überschreitet.

9. Videokodierungsprogramm nach Anspruch 8, das bewirkt, dass der Computer bestimmt, ob alle Frequenztransformationskoeffizienten in dem ersten Kodierungsverfahren 0 sind oder nicht, indem er das in dem ersten Parameter enthaltene kodierte Blockmuster (cbp) gemäß dem H.264/AVC-Standard beurteilt.

## Revendications

1. Dispositif d'encodage vidéo comprenant :

   un premier moyen d'encodage vidéo (11) pour encoder une image d'entrée d'après une première norme d'encodage afin de générer un premier paramètre qui comporte au moins des informations de taille de bloc ;
   une mémoire tampon (12) pour stocker l'image d'entrée ;
   un moyen de fusion (13) pour changer le premier paramètre généré par le premier moyen d'encodage vidéo (11), afin de générer un deuxième paramètre qui comporte au moins des informations de taille de bloc d'après une deuxième norme d'encodage qui est différente de la première norme d'encodage ; et
   un deuxième moyen d'encodage vidéo (14) pour encoder l'image d'entrée stockée dans la mémoire tampon (12) à l'aide du deuxième paramètre fourni depuis le moyen de fusion (13), afin d'encoder l'image d'entrée pour générer un flux binaire,
   dans lequel le premier moyen d'encodage vidéo (11) a pour fonction de gérer un premier processus d'encodage inclus dans un deuxième processus d'encodage géré par le deuxième moyen d'encodage vidéo (14), et
   dans lequel le moyen de fusion (13) change le premier paramètre par le premier processus d'encodage en deuxième paramètre correspondant au deuxième processus d'encodage et, dans le cas où tous les coefficients de transformation de fréquence dans le premier processus d'encodage sont de 0, fusionne des blocs dans le deuxième processus d'encodage en changeant le premier paramètre en deuxième paramètre.

2. Dispositif d'encodage vidéo selon la revendication 1, dans lequel le moyen de fusion (13) fusionne les blocs dans le deuxième processus d'encodage, à condition que la taille de bloc fusionné n'excède pas une taille de bloc correspondant au deuxième processus d'encodage.

3. Dispositif d'encodage vidéo selon la revendication 2, dans lequel le moyen de fusion (13) détermine si tous les coefficients de transformation de fréquence dans le premier processus d'encodage sont de 0 ou non, en jugeant un modèle de bloc codé (cbp) inclus dans le premier paramètre selon la norme H.264/AVC.

4. Procédé d'encodage vidéo comprenant :

   l'encodage d'une image d'entrée d'après une première norme d'encodage afin de générer un premier paramètre qui comporte au moins des informations de taille de bloc ;
   le stockage de l'image d'entrée dans une mémoire tampon (12) pour stocker l'image d'entrée ;
   le changement du premier paramètre, afin de générer un deuxième paramètre qui comporte au moins des informations de taille de bloc d'après une deuxième norme d'encodage qui est différente de la première norme d'encodage ; et
   l'encodage de l'image d'entrée stockée dans la mémoire tampon (12) à l'aide du deuxième paramètre afin d'encoder l'image d'entrée pour générer un flux binaire, à l'aide d'un moyen (14) ayant pour fonction de gérer un deuxième processus d'encodage qui comporte un premier processus d'encodage géré par le moyen (11) pour générer le premier paramètre,

dans lequel lors de la génération des deuxièmes données codées, le premier paramètre par le premier processus d'encodage est changé en deuxième paramètre correspondant au deuxième processus d'encodage et, dans le cas où tous les coefficients de transformation de fréquence dans le premier processus d'encodage sont de 0, des blocs dans le deuxième processus d'encodage sont fusionnés par changement du premier paramètre en deuxième paramètre.

5. Procédé d'encodage vidéo selon la revendication 4, dans lequel les blocs dans le deuxième processus d'encodage sont fusionnés à condition qu'une taille de bloc fusionné n'excède pas une taille de bloc correspondant au deuxième processus d'encodage.

6. Procédé d'encodage vidéo selon la revendication 5, dans lequel le fait que tous les coefficients de transformation de fréquence dans le premier processus d'encodage sont de 0 ou non est déterminé par jugement d'un modèle de bloc codé (cbp) dans le premier paramètre selon la norme H.264/AVC.

7. Programme d'encodage vidéo pour amener un ordinateur à exécuter :

un processus d'encodage d'une image d'entrée d'après une première norme d'encodage afin de générer un premier paramètre qui comporte au moins des informations de taille de bloc ;
un processus de stockage de l'image d'entrée dans une mémoire tampon (12) pour stocker l'image d'entrée ;
un processus de changement du premier paramètre, afin de générer un deuxième paramètre qui comporte au moins des informations de taille de bloc d'après une deuxième norme d'encodage qui est différente de la première norme d'encodage ; et
un processus d'encodage de l'image d'entrée stockée dans la mémoire tampon (12) à l'aide du deuxième paramètre afin d'encoder l'image d'entrée pour générer un flux binaire, par un processus de gestion d'un deuxième processus d'encodage qui comporte un premier processus d'encodage géré dans le processus de génération du premier paramètre,
dans lequel le programme d'encodage vidéo amène l'ordinateur, lors de la génération des deuxièmes données codées, à changer le premier paramètre par le premier processus d'encodage en deuxième paramètre correspondant au deuxième processus d'encodage et, dans le cas où tous les coefficients de transformation de fréquence dans le premier processus d'encodage sont de 0, à fusionner des blocs dans le deuxième processus d'encodage en changeant le premier paramètre en deuxième paramètre.

8. Programme d'encodage vidéo selon la revendication 7, amenant l'ordinateur à fusionner les blocs dans le deuxième processus d'encodage à condition que la taille de bloc fusionné n'excède pas une taille de bloc correspondant au deuxième processus d'encodage.

9. Programme d'encodage vidéo selon la revendication 8, amenant l'ordinateur à déterminer si tous les coefficients de transformation de fréquence dans le premier processus d'encodage sont de 0 ou non en jugeant un modèle de bloc codé (cbp) dans le premier paramètre selon la norme H.264/AVC.

FIG. 1

# FIG. 2

```
        typedef struct
        {
          mb_type;
          sub_mb_type[4];
          ref_idx_l0[4];
          ref_idx_l1[4];
          mv_l0[4][4][2];
          mv_l1[4][4][2];
          intra_lumaNxN_pred[4][4];
          intra_chroma_pred;
          transform_size_8x8_flag;
          cbp;
        } AVCMB
```

# FIG. 3

# FIG. 4

PERIPHERAL PIXEL = REFERENCE PIXEL

M A B C D E F G H
I
J   4x4
K   BLOCK
L

(a)  Intra_4x4

2:DC (AVERAGE VALUE)

8
1
6
3   7   0   5   4

(b)  PREDICTION DIRECTION

PERIPHERAL PIXEL

Y A B C D E F G H I J K L M N O P
Q
R
S
T   8x8 BLOCK
U
V
W
X

(c)  Intra_8x8

REFERENCE PIXEL

y a b c d e f g h i j k l m n o p
q
r
s
t   8x8 BLOCK
u
v
w
x

$a=(Y+2A+B+2)/4$
$b=(A+2B+C+2)/4$
$c=(B+2C+D+2)/4$
:

EP 3 107 296 B1

# FIG. 5

16x16 BLOCK

2:DC (AVERAGE), 3:Plane(PLANE)

1

0

(a) Intra_16x16

(b) PREDICTION DIRECTION

# FIG. 6

16x16      16x8      8x16      Tree

8x8      8x4      4x8      4x4

# FIG. 7

```
typedef struct
{
  cu_size[4];
  tu_size[4];
  pred_mode_flag[4];
  part_mode[4];
  ref_idx_l0[4];
  ref_idx_l1[4];
  mv_l0[4][4][2];
  mv_l1[4][4][2];
  intra_lumaNxN_pred[4][4];
  intra_chroma_pred[4];
} HEVCCB
```

# FIG. 8

| AVC | | HEVC | | | | |
|---|---|---|---|---|---|---|
| mb_type | intra_lumaNxN_pred | cu_size | tu_size | pred_mode_flag | part_mode | intra_lumaNxN_pred |
| Intra_16x16 | V | 16 | 4 | 1 | 2Nx2N | INHERITANCE |
| Intra_16x16 | H | 16 | 4 | 1 | 2Nx2N | INHERITANCE |
| Intra_16x16 | DC | 16 | 4 | 1 | 2Nx2N | INHERITANCE |
| Intra_16x16 | Plane | 16 | 4 | 1 | 2Nx2N | Planar |
| Intra_8x8 | ALL PREDICTION DIRECTIONS ARE SAME IN MB | 16 | 8 | 1 | 2Nx2N | INHERITANCE |
| Intra_8x8 | OTHER | 8 | 8 | 1 | 2Nx2N | INHERITANCE |
| Intra_4x4 | ALL PREDICTION DIRECTIONS ARE SAME IN MB | 16 | 8 | 1 | 2Nx2N | INHERITANCE |
| Intra_4x4 | ALL PREDICTION DIRECTIONS ARE SAME IN 8×8 SUBBLOCK | 8 | 4 | 1 | 2Nx2N | INHERITANCE |
| Intra_4x4 | OTHER | 8 | 4 | 1 | NxN | INHERITANCE |

EP 3 107 296 B1

## FIG. 9

| AVC | | HEVC | | | | |
|---|---|---|---|---|---|---|
| mb_type | intra_lumaNxN_pred | cu_size | tu_size | pred_mode_flag | part_mode | intra_lumaNxN_pred |
| P_Skip | NA | 16 | 4 << transform_size_8x8_flag | 0 | 2Nx2N | NA |
| P_inter_16x16 | NA | 16 | 4 << transform_size_8x8_flag | 0 | 2Nx2N | NA |
| P_inter_16x8 | NA | 16 | 4 << transform_size_8x8_flag | 0 | 2NxN | NA |
| P_inter_8x16 | NA | 16 | 4 << transform_size_8x8_flag | 0 | Nx2N | NA |
| P_8x8 | NA | 16 | 4 << transform_size_8x8_flag | 0 | 2Nx2N | NA |
| Intra_16x16 | V | 16 | 4 | 1 | 2Nx2N | INHERITANCE |
| Intra_16x16 | H | 16 | 4 | 1 | 2Nx2N | INHERITANCE |
| Intra_16x16 | DC | 16 | 4 | 1 | 2Nx2N | INHERITANCE |
| Intra_16x16 | Plane | 16 | 4 | 1 | 2Nx2N | Planar |
| Intra_8x8 | ALL PREDICTION DIRECTIONS ARE SAME IN MB | 16 | 8 | 1 | 2Nx2N | INHERITANCE |
| Intra_8x8 | OTHER | 8 | 8 | 1 | 2Nx2N | INHERITANCE |
| Intra_4x4 | ALL PREDICTION DIRECTIONS ARE SAME IN MB | 16 | 8 | 1 | 2Nx2N | INHERITANCE |
| Intra_4x4 | ALL PREDICTION DIRECTIONS ARE SAME IN 8×8 SUBBLOCK | 8 | 4 | 1 | 2Nx2N | INHERITANCE |
| Intra_4x4 | OTHER | 8 | 4 | 1 | NxN | INHERITANCE |

EP 3 107 296 B1

## FIG. 10

| AVC | | | HEVC | | | | |
|---|---|---|---|---|---|---|---|
| mb_type | MV | intra_lumaNxN_pred | cu_size | tu_size | pred_mode_flag | part_mode | intra_lumaNxN_pred |
| B_Skip | ALL MOTION VECTORS ARE SAME IN MB | NA | 16x16 | 4 << transform_size_8x8_flag | 0 | 2Nx2N | NA |
| B_Skip | NOT ALL MOTION VECTORS ARE SAME IN MB | NA | 8x8 | 4 << transform_size_8x8_flag | 0 | 2Nx2N | NA |
| B_Direct_16x16 | ALL MOTION VECTORS ARE SAME IN MB | NA | 16x16 | 4 << transform_size_8x8_flag | 0 | 2Nx2N | NA |
| B_Direct_16x16 | NOT ALL MOTION VECTORS ARE SAME IN MB | NA | 8x8 | 4 << transform_size_8x8_flag | 0 | 2Nx2N | NA |
| B_inter_16x16 | NA | NA | 16x16 | 4 << transform_size_8x8_flag | 0 | 2Nx2N | NA |
| B_inter_16x8 | NA | NA | 16x16 | 4 << transform_size_8x8_flag | 0 | 2NxN | NA |
| B_inter_8x16 | NA | NA | 16x16 | 4 << transform_size_8x8_flag | 0 | Nx2N | NA |
| B_8x8 | NA | NA | 8x8 | 4 << transform_size_8x8_flag | 0 | 2Nx2N | NA |
| Intra_16x16 | NA | V | 16 | 4 | 1 | 2Nx2N | INHERITANCE |
| Intra_16x16 | NA | H | 16 | 4 | 1 | 2Nx2N | INHERITANCE |
| Intra_16x16 | NA | DC | 16 | 4 | 1 | 2Nx2N | INHERITANCE |
| Intra_16x16 | NA | Plane | 16 | 4 | 1 | 2Nx2N | Planar |
| Intra_8x8 | NA | ALL PREDICTION DIRECTIONS ARE SAME IN MB | 16 | 8 | 1 | 2Nx2N | INHERITANCE |
| Intra_8x8 | NA | OTHER | 8 | 8 | 1 | 2Nx2N | INHERITANCE |
| Intra_4x4 | NA | ALL PREDICTION DIRECTIONS ARE SAME IN MB | 16 | 8 | 1 | 2Nx2N | INHERITANCE |
| Intra_4x4 | NA | ALL PREDICTION DIRECTIONS ARE SAME IN 8×8 SUBBLOCK | 8 | 4 | 1 | 2Nx2N | INHERITANCE |
| Intra_4x4 | NA | OTHER | 8 | 4 | 1 | NxN | INHERITANCE |

# FIG. 11

HEVCCB

| | |
|---|---|
| 0 | 1 |
| 2 | 3 |

32 PIXELS

32 PIXELS

# FIG. 12

HEVCCB

| | | | |
|---|---|---|---|
| 0 | 1 | 2 | 3 |
| 4 | 5 | 6 | 7 |
| 8 | 9 | 10 | 11 |
| 12 | 13 | 14 | 15 |

64 PIXELS

64 PIXELS

# FIG. 13

(a)

16 PIXELS

16 PIXELS

TU SIZE 4x4

⇒

16 PIXELS

16 PIXELS

TU SIZE 16x16

(b)

16 PIXELS

16 PIXELS

TU SIZE 8x8

⇒

16 PIXELS

16 PIXELS

TU SIZE 16x16

(c)

32 PIXELS

32 PIXELS

TU SIZE 16x16

⇒

32 PIXELS

32 PIXELS

TU SIZE 32x32

# FIG. 14

START

EXTEND SIZE ── S101

FIRST VIDEO ENCODE ── S102

TRANSCODE CODED DATA ── S103

SECOND VIDEO ENCODE ── S104

END

FIG. 15

# FIG. 16

```
         ┌─────────────┐
         │    START    │
         └──────┬──────┘
                │
                ▼
  ┌───────────────────────────────┐
  │   TRANSFORM PIXEL BIT DEPTH    │──S201
  └───────────────┬───────────────┘
                  │
                  ▼
  ┌───────────────────────────────┐
  │      FIRST VIDEO ENCODE        │──S202
  └───────────────┬───────────────┘
                  │
                  ▼
  ┌───────────────────────────────┐
  │     TRANSCODE CODED DATA       │──S203
  └───────────────┬───────────────┘
                  │
                  ▼
  ┌───────────────────────────────┐
  │      SECOND VIDEO ENCODE       │──S204
  └───────────────┬───────────────┘
                  │
                  ▼
         ┌─────────────┐
         │     END     │
         └─────────────┘
```

# FIG. 17

# FIG. 18

```
        START
          │
          ▼
┌─────────────────────────┐
│      DOWN SAMPLE        │ ～S301
└─────────────────────────┘
          │
          ▼
┌─────────────────────────┐
│    FIRST VIDEO ENCODE   │ ～S302
└─────────────────────────┘
          │
          ▼
┌─────────────────────────┐
│   TRANSFORM CODED DATA  │ ～S303
└─────────────────────────┘
          │
          ▼
┌─────────────────────────┐
│   SECOND VIDEO ENCODE   │ ～S304
└─────────────────────────┘
          │
          ▼
         END
```

# FIG. 19

| UPPER LEFT | UPPER RIGHT |
|------------|-------------|
| LOWER LEFT | LOWER RIGHT |

## FIG. 20

EP 3 107 296 B1

# FIG. 21

EP 3 107 296 B1

# FIG. 22

1003

1001

1004

STORAGE MEDIUM

VIDEO DATA →

PROCESSOR

← BITSTREAM

STORAGE MEDIUM

← VIDEO DATA

← BITSTREAM

1002

PROGRAM MEMORY

# FIG. 23

11

13

INPUT IMAGE

FIRST VIDEO ENCODING SECTION

CODED DATA TRANSCODING/ MERGING SECTION

12

14

BUFFER

SECOND VIDEO ENCODING SECTION

→ BITSTREAM

# FIG. 24

# FIG. 25

# FIG. 26

EP 3 107 296 B1

# FIG. 27

## FIG. 28

INTER-FRAME PREDICTION BLOCK

$MV=(mv_x,mv_y)$

$mv_y$

$mv_x$

BLOCK TO BE ENCODED

(REFERENCE PICTURE)

(PICTURE TO BE ENCODED)

t-1

t

TIME

EP 3 107 296 B1

# FIG. 29

# FIG. 30

EP 3 107 296 B1

# FIG. 31

# FIG. 32

# FIG. 33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012104940 A
- JP 2001359104 A

- JP 2014023088 A

**Non-patent literature cited in the description**

- High Efficiency Video Coding (HEVC). *draft 10 (for FDIS & Last Call) of ITU-T SG16 WP3 and ISO/IEC JTC1/SC29/WG11 12th Meeting,* 14 January 2013
- High efficiency video coding (HEVC). *draft 7 of ITU-T SG16 WP3 and ISO/IEC JTC1/SC29/WG11 12th Meeting,* 27 April 2012

- Fast Transcoding from H.264 AVC to High Efficiency Video Coding. **DONG ZHANG et al.** MULTIMEDIA AND EXPO (ICME), 2012 IEEE INTERNATIONAL CONFERENCE ON. IEEE, 09 July 2012, 651-656
- Ultra Fast H.264/AVC to HEVC Transcoder. **TONG SHEN et al.** DATA COMPRESSION CONFERENCE (DCC). IEEE, 20 March 2013, 241-250